# Europäisches Patentamt

## European Patent Office

## Office européen des brevets

(19)

(11) Veröffentlichungsnummer: **0 100 787**
**B1**

(12) **EUROPÄISCHE PATENTSCHRIFT**

(45) Veröffentlichungstag der Patentschrift:
07.01.88

(51) Int. Cl.⁴: **B 23 K 9/20**

(21) Anmeldenummer: **82107431.7**

(22) Anmeldetag: **16.08.82**

---

(54) **Verfahren und Vorrichtung für optimale Bolzenschweissung mit Spitzenzündung.**

---

(43) Veröffentlichungstag der Anmeldung:
**22.02.84 Patentblatt 84/8**

(45) Bekanntmachung des Hinweises auf die Patenterteilung:
**07.01.88 Patentblatt 88/1**

(84) Benannte Vertragsstaaten:
**AT BE CH DE FR GB IT LI NL SE**

(56) Entgegenhaltungen:
**WO - A - 82/03033
US - A - 3 519 787
US - A - 4 031 349
US - A - 4 042 800
US - A - 4 117 298
US - A - 4 182 949**

**Sonderdruck aus DVS Berichte, Band 73, Deutscher Verlag für Schweißtechnik GmbH, Düsseldorf; O. Hahn und K. G. Schmitt:"Prozeßbegleitende Qualitätskontrolle beim Bolzenschweißen mit Spitzenzündung".**

(73) Patentinhaber: **Hahn, Ortwin, Prof. Dr.-Ing., Scherfeder Strasse 48, D-4790 Paderborn (DE)**

(72) Erfinder: **Hahn, Ortwin, Prof.-Dr.-Ing., Scherfeder Strasse 48, D-4790 Paderborn (DE)**
Erfinder: **Schmitt, Klaus Gisbert, Dipl.-Ing., Birkenweg 19, D-4791 Altenbeken-Schwaney (DE)**
Erfinder: **Rostek, Wilfried, Dipl.-Ing., Arnold-Schlüter-Weg 37, D-4790 Paderborn (DE)**

(74) Vertreter: **Hanewinkel, Lorenz, Dipl.-Phys., Patentanwalt Ferrariweg 17a, D-4790 Paderborn (DE)**

---

## Beschreibung

Die Erfindung betrifft ein Bolzenschweissverfahren mit Spitzenzündung zwischen einem Bolzen und einem Werkstück mit einem Schweisskopf mit einer Andruckvorrichtung mit einer auf eine Anfangsfederkraft voreinstellbaren Feder zum Andrücken des Bolzens mit seiner Spitze aus einem voreinstellbaren Abstand auf eine Oberfläche des Werkstückes und mit einem Schweisskabel, welches den Bolzen über Schaltmittel entsprechend einer einstellbaren Kapazitätsvorwahl mit einer Schweisskondensatorenanordnung verbindet, die andererseits mit dem Werkstück zu verbinden ist und die mit einer einstellbaren Ladevorrichtung auf die Anfangsschweissspannung ladbar ist.

Die Anfangsfederkraft, Schweisskondensatorkapazität und Anfangsschweissspannung sind sogenannte Betriebsparameter, die jeweils Stellgrössen gemäss einzustellen sind.

Es sind auf der Basis aus praktischer Erprobung und gewonnener Erfahrung erstellte Tabellen und Rechenvorrichtungen bekannt, mit denen die Sollwerte für die Einstellung der elektrischen und mechanischen Parameter einer Schweissung ermittelt werden, wobei hierfür Kennwerte als Ausgangswerte benutzt werden, die bekannten Norm-, Nenn- oder Mittelwerten oder auch qualitativen Angaben, z.B. über den Oberflächenzustand, entsprechen.

Die tatsächlichen Ist-Kennwerte weisen diesen Werten und Angaben gegenüber grosse Toleranzen bezüglich der einzelnen Komponenten und der verwendeten Chargen und Oberflächen auf und weisen Abweichungen durch Alterung und Betriebszustände auf, wodurch die ermittelten Sollwerte der Parameter nicht optimal für den Einzelfall sind und deshalb die Schweissstelle bzw. der angeschweisste Bolzen nur mit einem Bruchteil der maximal möglichen Last garantiert genutzt werden kann.

Es ist aus DVS (Deutscher Verlag für Schweisstechnik GmbH, Düsseldorf), Bd. 73, O. Hahn und K.G. Schmitt, «Vollautomatisches Schweissen und Schneiden mit Industrierobotern», S. 38–42, Düsseldorf 1982, bekannt, dass durch eine Analyse zeitlicher Verläufe der Schweisssignale charakteristische Grössen bestimmt werden können, die einen Rückschluss auf die Qualität der Schweissung ermöglichen, indem diese Grössen mit aus zahlreichen Versuchen mit entsprechenden Bolzen- und Oberflächen gewonnenen Norm- oder Grenzwerten verglichen werden.

Es ist Aufgabe der Erfindung, ein Verfahren zu offenbaren, das es ermöglicht, den Einfluss der Abweichungen und Toleranzen auf die Schweissungen weitgehend auszuschalten und somit die Qualität der Schweissung und die Belastbarkeit der Schweissstelle zu erhöhen.

Die verfahrenstechnische Lösung besteht darin, dass der Schweisskopf Messmittel zur Aufnahme des zeitlichen Verlaufes von Schweisssignalen, nämlich von Schweissstrom, Schweissspannung und Bolzenschaftweg, besitzt, deren Signale an einen Messwertanalysator in einer Steuervorrichtung geführt werden, der daraus folgende charakteristischen Grössen,
einen Spitzenkontakt Zeitpunkt $t_0$,
einen Spitzenexplosionszeitpunkt $t_1$,
einen Bolzenkurzschlusszeitpunkt $t_2$,
einen Zeitpunkt des Strommaximums $t_m$,
einer Bolzenschmelzeindringtiefe $d_3$,
einen Bolzenschaftrückprallweg $d_4$ und
einer Kontinuität des Stromverlaufes,
ableitet und der Steuervorrichtung zuführt, die diese charakteristischen Grössen oder Kombinationen davon mit zuvor eingegebenen Richtwerten oder mit bei einer vorhergehenden Schweissung abgeleiteten Werten für diese charakteristischen Grössen oder Kombinationen davon vergleicht und aus diesem Vergleich über zuvor durch Versuchsreihen, Analysen und mathematische Auswertung ermittelte tendenzielle Zuordnungen zwischen jeweils einer charakteristischen Grösse oder einer der Kombinationen und jeweils einer Stellgrösse und dem darin enthaltenen gemessenen Punkt des optimalen Schweisserfolges eine Veränderung der zu dem Messzeitpunkt bestehenden Stellgrössen für die Anfangsfederkraft, die Kapazität und der Anfangsschweissspannung errechnet und für die folgende Schweissung an die entsprechenden Stellglieder für die Federverstellung, Kapazitätsvorwahl und Ladevorrichtungen mittelbar oder unmittelbar weitergibt.

Eine vorteilhafte Weiterentwicklung des Verfahrens besteht darin, dass die charakteristischen Grössen mehrerer Schweissvorgänge, die z.B. zur Charge Bolzen bzw. gleichen Charge Oberflächen bzw. gleichen Position des Schweissgerätes am Schweissstück gehören, ermittelt werden und für die Ermittlung der neuen Ist-Kennwerte benutzt werden. Auf diese Weise arbeitet die Schweissvorrichtung selbstoptimierend. Diese selbstoptimierende Arbeitsweise ist insbesondere dann ein Vorteil, wenn Materialien mit noch unbekannten Eigenschaften verarbeitet werden, oder eine neue Vorrichtung mit unbekanntem Verhalten zum Einsatz kommt, so dass nicht nur die angenommenen Anfangskennwerte selbst mit Toleranzen behaftet sind, sondern auch der Zusammenhang der Kennwerte mit optimalen Betriebsparametern weitgehend unbekannt ist. In diesem Fall werden die Betriebsparameter aus den charakteristischen Grössen direkt ermittelt. Da die optimalen charakteristischen Grössen nach einer vorteilhaften Ausgestaltung des Verfahrens so gewählt sind, dass sie weitgehend materialunabhängig sind und deren Abhängigkeit von den Betriebsparametern eindeutig und bekannt ist, wie in den Beispielen gezeigt wird, ergibt sich somit über eine geringe Anzahl von Schweissungen eine Regelung zum Optimum. Der im eingeregelten Zustand ermittelte optimale Zusammenhang zwischen den ebenfalls ermittelten Ist-Kennwerten und den Betriebsparametern wird nach einer vorteilhaften Weiterentwicklung des Verfahrens gespeichert und für spätere Schweissungen mit gleichen Materialien bzw. der gleichen Vorrichtung bei der Durchführung des Verfahrens benutzt.

Eine weitere vorteilhafte Weiterentwicklung besteht darin, dass vor der Durchführung einer Schweissung Kenngrössen, z.B. Kapazität des Schweisskondensators, Induktivität der Zuleitung, Bolzenabstand, Federkonstante, hilfsweise gemessen werden, wodurch die betreffenden Toleranzen und betriebsbedingten Abweichungen eliminiert werden und das Gesamttoleranzfeld weiter eingeengt wird.

In einer Ausführungsart wird das Bolzenschweissverfahren mit Spitzenzündung mit Messwertaufnehmern für den zeitlichen Verlauf der Schweissspannung, des Schweissstromes, des Bolzenweges, des Schalldruckes oder auch für die Kapazität des Schweisskondensators, die Induktivität der Zuleitung, den Bolzenabstand, die Federkonstante und mit einer daran angeschlossenen Auswerteschaltung durchgeführt. Bei Vorhandensein mehrerer Messwertaufnehmer ist eine Redundanz vorhanden, die vorteilhaft zur Selbstkontrolle der gesamten Vorrichtung genutzt wird. So kann z.B. zusätzlich die Lichtbogenstrahlung gemessen und ausgewertet werden.

In weiterer vorteilhafter Ausgestaltung des Verfahrens werden die vorgesehenen Messmittel zusätzlich für eine Kontrolle der exakten Positionierung des Schweisskopfes zur Oberfläche und zur Abgabe von Korrektursignalen an die Positioniereinrichtung des Schweisskopfes genutzt. Auch diese Massnahme dient zur Einengung der Toleranz, nämlich der Abstandstoleranz und zur Vermeidung einer Qualitätseinbusse, die durch das unsymmetrische seitliche Herausdrücken von flüssigem Material entsteht.

Da das Verfahren Stellwerte liefert, ist in einer vorteilhaften Ausgestaltung eine direkte Verknüpfung der Signalausgänge, die die neuen Soll-Werte liefern, mit den Stelleingängen der Stellglieder verbunden. Dies betrifft sowohl die elektrischen wie auch die mechanischen Stellglieder, die zweckmässig über geeignet steuerbare motorische Antriebe eingestellt werden.

Da das Verfahren automatisch optimiert und Betriebsstörungen durch Alarmsignale anzeigt, ist es besonders vorteilhaft geeignet für Schweissautomaten. Es erfolgt dabei zweckmässig eine Verknüpfung der Schweissvorrichtung mit der Positionier- und Materialzuführvorrichtung über Signalleitungen, über die entsprechend der jeweiligen Schweissung Kennwerte und Schrittnummer der Schweissvorrichtung zugeführt werden, worauf entsprechend zugeordnete Mittelungen der Ist-Kennwerte vorgenommen werden.

Weiterhin werden zweckmässig die erzeugten Alarmsignale der Positionier- bzw. Materialzuführvorrichtung zugeführt, so dass eine erneute Positionierung, z.B. für eine günstigere, induktionsfreiere Kabelführung, einen besseren Oberflächenkontakt oder eine Zusatzschweissung automatisch gesteuert vorgenommen wird. Ebenso wird der Schweisskopf als Ganzes oder in Teilen entsprechend einem angezeigten Fehler automatisch ausgetauscht.

Weiterhin wird zweckmässig eine Lageinformation von der Positioniereinrichtung als weiterer Kennwert in das Verfahren eingeführt, da die Lage einen merklichen Einfluss auf die Bolzenbeschleunigung hat.

Eine zweckmässige Ausgestaltung besteht darin, dass an die Schaltungsanordnung ein Ausgabegerät z.B. Drucker angeschlossen ist, an den die Ist-Kennwerte und/oder die charakteristischen Grössen ausgegeben werden, so dass sich eine Übersicht über das Qualitätsniveau der Schweissungen und der Ausgangsmaterialien insbesondere der Oberflächenbeschaffenheit sowie der Schweissvorrichtung selbst ergibt und qualitätssteigernde vorbereitende Massnahmen ergriffen werden können.

In den Figuren 1 bis 12 sind Einzelheiten eines Ausführungsbeispiels bezüglich der Messvorrichtung, der Auswerteschaltung und der auftretenden Signalverläufe gezeigt.

Fig. 1 zeigt einen Schweisskopf mit Messwertaufnehmern und Stellmittel;

Fig. 2 zeigt einen Ausschnitt aus Fig. 1 mit Bolzen;

Fig. 3 zeigt den zeitlichen Verlauf des Bolzenweges;

Fig. 4 zeigt zeitliche Verläufe der Schweissspannung in verschiedenen Fällen;

Fig. 5 zeigt zeitliche Verläufe des Schweissstromes in verschiedenen Fällen;

Fig. 6 zeigt Spektralverteilungen der Schweissgeräusche verschiedener Schweissungen;

Fig. 7 zeigt eine Schaltungsanordnung zur Durchführung des Verfahrens;

Fig. 8 zeigt eine Zusatzschaltung zur Schaltungsanordnung Fig. 7 zur Vorauswertung der Messsignale;

Fig. 9 zeigt einen Verfahrensablauf schematisch;

Fig. 10 zeigt einen Verfahrensablauf mit entkoppelten Optimierungsschleifen;

Fig. 11 zeigt die Verfahrensschritte zur Adaption und Stabilisierung der Werte;

Fig. 12 Bezugszeichentabelle.

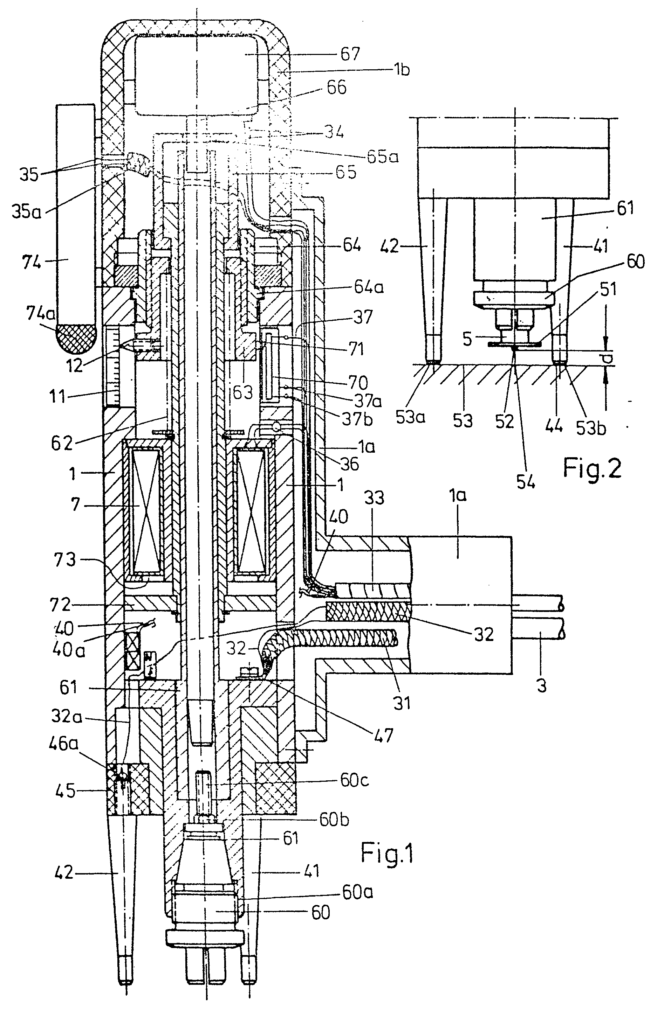

In Fig. 1 ist ein Schweisskopf dargestellt, dessen Grundkonstruktion in der Firmendruckschrift «Nelson Bolzenschweissanlage Modell SK 70» Ausg. 1973 beschrieben ist und der mit Mess- und Stellmitteln und den dafür erforderlichen Kabelanschlüssen ausgerüstet ist. In einem Gehäuse 1 ist achsial verschieblich ein Schaft 61 gelagert, der am unteren Ende ein Spannfutter 60 trägt und in der Mitte von einem Elektromagneten 7 umgeben ist, in dessen ringförmigen Luftspalt 73 ein Anker 72, der auf dem Schaft 61 befestigt ist, bei Bestromung der Spule angezogen wird. Gegen die Magnetkraft wirkt eine Druckfeder 62, die sich einerseits am Schaft 61 und andererseits in einer Hülse 63 abstützt, die durch Verdrehen einer Gewindehülse 64, die im Gehäuse 1 mit Kragen 64a gelagert ist, in achsialer Richtung verschiebbar ist. An der Hülse 63 ist ein Zeiger 12 angebracht, der auf einer Skala 11, die sich am Gehäuse 1 befindet, die Einstellung der Lage der Hülse und damit die Anfangskraft Ko der Feder 62 anzeigt.

Am unteren Ende des Gehäuses 1 befinden sich drei Stützfüsse 41, 42, 43, auf deren Endflächen 44 eine exakte Lagerung des Schweisskopfes bezüglich der Oberfläche 53 des Werkstückes erfolgt, wenn geschweisst werden soll.

In Fig. 2 ist die Ausgangsposition bei angezogenem Anker 72 dargestellt, in der der in das Spannfutter 60 eingesetzte Bolzen 5 sich mit seiner Spitze 52 im Abstand do über dem Punkt 54 der Oberfläche 53 befindet.

Die exakte Einstellung des Abstandes do kann durch einen justierbaren Anschlag mit der Stellmutter 60b am Gewindezapfen 60a vorgegeben werden.

Das Gehäuse 1 besitzt einen Tragarm 1a, durch den die Kabel 3 geführt sind. Dieses Kabel enthält das Schweisskabel 31, das am Anschluss 47 mit dem Schaft 61 verbunden ist. Weiterhin ist das Magnetanschlusskabel 36 zum Elektromagneten 7 geführt.

In diesen bekannten Schweisskopf sind nun folgende Teile eingebaut:

Ein Spannungsmesskabel 32, das als Koaxialkabel ausgeführt ist und dessen Mantel ebenfalls mit Anschluss 47 verbunden ist und dessen Ader 32a an Anschluss 46a des Stützfusses 42 geführt ist, wobei der Stützfuss 42 isoliert gegen den Schaft 61 im Ring 45 befestigt ist.

In einer vorteilhaften Ausführung sind auch die anderen Stützfüsse 41, 43 über Adern 32b, c einzeln elektrisch herausgeführt.

Weiterhin befindet sich entsprechend dem Zeiger 12 auf der Skala 11 ein Potentiometerschleifer 71, mechanisch verbunden aber elektrisch isoliert zur Hülse 63 auf dem Potentiometer 70.

Die drei Potentiometeranschlüsse sind über Anschlüsse 37a, b herausgeführt und ermöglichen so eine elektrische Messung der Einstellung der Anfangskraft Ko bzw. genauer gesagt der Lage des Widerlagers der Feder 62.

Weiterhin ist im oberen Teil des Gehäuses 1 ein Stellmotor 67 eingebaut, der über eine Welle 66, die mit einem nicht dargestellten Mitnehmer in eine entsprechende Öffnung 65a eines Verbindungsstückes 65, das andererseits an der Gewindehülse 64 befestigt ist, verschieblich eingreift. Bei Bestromung des Motors 67 über die Motorzuleitung 34 wird somit, je nach Drehrichtung bzw. Bestromungsrichtung die Hülse 63 auf- oder abwärts verschoben und somit die Anfangskraft Ko der Feder 62 verändert.

Weiterhin ist aussen am Gehäuse 1 ein Mikrofon 74 befestigt, dessen Mikrofonkopf 74a auf die Schweissstelle ausgerichtet ist. In gleicher Weise kann eine Lichtmesssonde angeordnet sein.

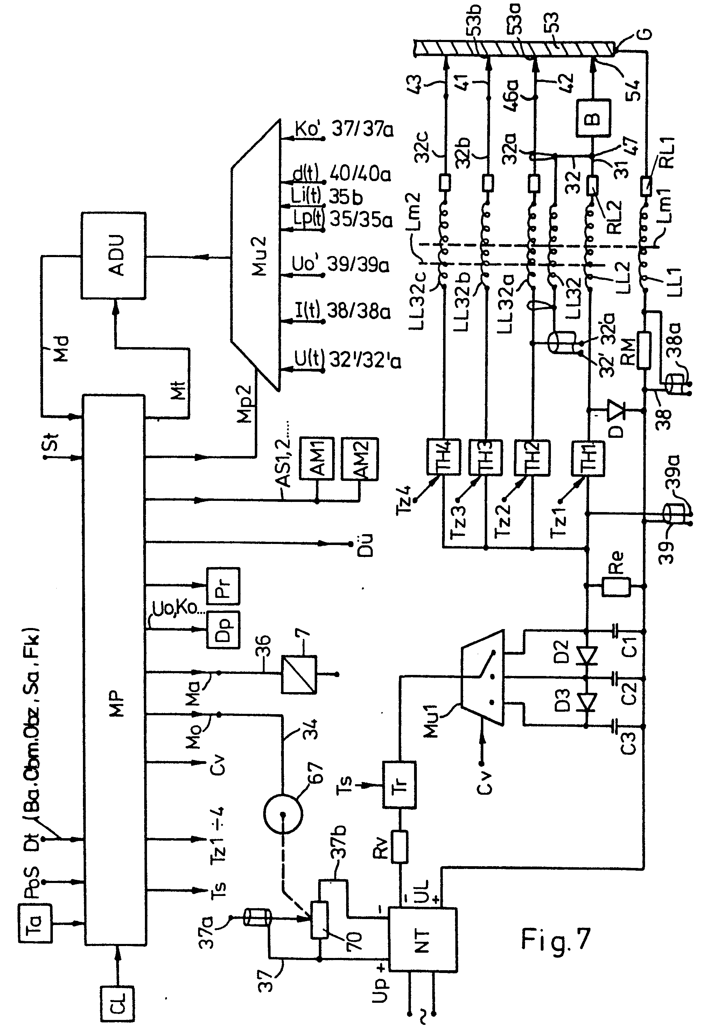

Eine elektrische Ansteuerungs- und Messwertverarbeitungsschaltung ist in Fig. 7 gezeigt, wobei die Kabelanschlüsse und Bauteile mit gleichen Bezugszeichen gekennzeichnet sind, die Bauelemente aber durch ihre elektrischen Schaltbilder symbolisiert sind. Die Schaltung wird durch einen Prozessor Mp, z.B. Mikroprozessor, gesteuert. Dieser wird durch einen Taktgenerator Cl getaktet und mit Programmen und Ausgangsdaten über die funktionalen Zusammenhänge zur Ermittlung der Betriebsparameter aus den Kennwerten oder charakteristischen Grössen und mit den Grenzwerten und Vergleichsvorschriften über eine Tastatur Ta oder über eine Datenübertragung aus einem bekannten Eingabegerät gespeist.

Sofern ein Positioniergerät mit der Vorrichtung zusammenarbeitet, werden von dort an den Prozessor MP ein Positionssignal PoS und Kennwerte über eine Datentransferverbindung Dt geliefert.

Die Ausgänge des Prozessors MP steuern den Magneten 7 des Schweisskopfes und die Stellmittel zur Vorgabe der Betriebsparameter, sowie die Zündung der Entladung durch Signal Tz1, das an den Thyristor TH1 im Schweissstromkreis geführt ist. Der Schweissstromkreis selbst wird gebildet durch den Schweisskondensator C, der sich aus den jeweils durch die Kapazitätsvorwahl Cv bestimmten Kondensatoren C1, C2 und C3 additiv zusammensetzt, der Zuleitung, die sich aus dem Schweisskabel 31 zum Schweisskopf mit der Leitungsinduktivität LL2 und dem Leitungswiderstand RL2 und dem Erdkabel, das die Leitungsinduktivität LL1 und den Leitungswiderstand RL1 enthält, und dem Bolzen mit seiner Spitze, die einen ohmschen Widerstand darstellt, oder dem Lichtbogen B, der in seinem Verhalten einer Zenerdiode etwa entspricht.

Der Einfachheit halber wird die gesamte Leitungsinduktivität im folgenden als L bezeichnet. Sie setzt sich aus den Teilinduktivitäten LL1 und LL2 zusammen und bestimmt sich zusätzlich aus der induktiven Verkopplung Lm1 der Zuleitungen untereinander, d.h., sie ist abhängig von der Lage der Zuleitungen zueinander. Ein Teil des Schweissstromkreises wird ausserdem durch das Werkstück selbst gebildet und zwar zwischen der Schweissstelle 54 und dem Anschlusspunkt G des Erdkabels. Auch dieser Anteil an Induktivität, der von dem Werkstück und der Position der Schweissstelle und des Erdkabels und ebenfalls von der Verkopplung des Magnetfeldes mit dem des Schweiss- und Erdkabels abhängt, ist in der Leitungsinduktivität L enthalten.

In Reihe mit dem Stromkreis ist ein sehr kleiner Messwiderstand RM geschaltet, an dessen Enden die Messleitung 38, 38a angeschlossen ist, die zu dem Messmultiplexer Mu2 geführt ist.

Um ein Schwingen des Schweissstromes zwischen dem Schweisskondensator und der Leitungsinduktivität zu verhindern, ist der Kondensator mit einer Diode D überbrückt, durch die der Schweissstrom geleitet wird, wenn die Energie vollständig aus dem Schweisskondensator in die Leitungsinduktivität übernommen ist.

Über die Schweissstelle bzw. den Bogen B ist die Spannungsabfühlung mit dem koaxialen Kabel 32, 32a gelegt. Die Ader 32a des Kabels ist, wie bereits oben gezeigt, an einem Stützfuss 42, der im Punkt 53a die Spannung von der Werkstückoberfläche 53 abnimmt, angeschlossen und die Abschirmung 32 an Anschluss 47. Dieses Kabel 32, 32a liegt parallel zum Zuleitungskabel 31 und ist somit eng induktiv mit diesem verkoppelt über die Koppelinduktivität Lm2. Auf der Seite des Speisegerätes ist das Kabelende 32', 32'a an den Messmultiplexer Mu2 geführt. Ausserdem ist eine Spannungsmessleitung 39, 39a einerseits mit den Anschlüssen des Schweisskondensators C1 und andererseits mit dem Messmultiplexer Mu2 verbunden.

Der Messmultiplexer wird durch ein Steuersignal Mp2 vom Prozessor MP auf den jeweils zu bewertenden Eingang geschaltet, und sein Ausgang ist auf einen Analog-Digitalwandler ADU geführt, der getriggert durch das Steuersignal Mt vom Prozessor diesem den digitalisierten Messwert Md überträgt.

Zur Voreinstellung der elektrischen Betriebsparameter steuert der Prozessor MP den Multiplexer Mu1 durch das Kapazitätsvorwahlsignal Cv auf die bestimmte Kondensatoranwahl, und der Messmultiplexer steuert den Eingang Uo' an, an dem die Kondensatorspannung anliegt.

Durch Ausgabe des Steuersignals Ts wird dann vom Prozessor der Ladetransistor Tr eingeschaltet, der den Ladestrom vom Netzteil NT über den Vorwiderstand Rv in die gewählten Kondensatoren C1 bis C3 freigibt bis der gemessene Spannungswert die gewünschte Grösse Uo erreicht hat. Anschliessend erfolgt die Zündung des Thyristors TH1 mit dem Steuersignal Tz1 und die Abschaltung des Magneten 7, so dass der Bolzen durch die Federkraft zum Werkstück bewegt wird.

Die Einstellung des mechanischen Betriebsparameters, der Anfangskraft Ko der Feder, erfolgt ebenfalls in einem Regelkreis über den Prozessor. Hierzu ist das Potentiometer mit seinen Enden an eine Spannung Up angeschlossen und sein Schleifer über das Kabel 37a an den Messmultiplexer Mu2 geführt.

Über das Steuersignal Mo wird der Motor 67 jeweils rechts- bzw. linksdrehend gesteuert, bis das damit verbundene Potentiometer das Signal Ko' am Schleifer abgibt, das dem gewünschten Betriebsparameter entspricht.

Am Prozessor MP sind ausserdem Ausgänge zur Steuerung der Alarmmelder AM1, AM2, einer Anzeigeeinheit Dp, eines Druckers Pr und einer Datenübertragungsleitung Dü z.B. zur Steuerung der Positioniervorrichtung vorgesehen.

Die Betriebsparameter können selbstverständlich auch von Hand eingestellt werden, wobei die durch den Prozessor bestimmten Werte auf der Anzeige oder den Drucker ausgegeben werden. Die Spannungsvorgabe erfolgt dann mit einem bekannten steuerbaren Netzteil.

Die dargestellte Vorrichtung kann vorteilhaft zur Bestimmung einzelner Kennwerte vor Beginn einer Schweissung benutzt werden.

Zur Messung der Kapazität des Schweisskondensators C bzw. der Schweisskondensatoren C1, C2, C3 werden diese auf eine Anfangsspannung, wie beschrieben, aufgeladen und deren Entladungszeitkonstante durch Messung der Spannung Vo' und der zugehörigen Entladezeit, z.B. bis zum Erreichen der halben Spannung, bestimmt. Hierzu ist ein Entladewiderstand Re, der eng toleriert ist, den Kondensatoren parallel geschaltet. Er ist ausserdem aus sicherheitstechnischen Gründen vorgesehen zur Entladung, wenn eine Zündung durch den Bolzen nicht erfolgt ist.

Weiterhin kann die Induktivität L des Schweisskreises vorab bestimmt werden, was besonders wichtig ist, da diese sehr stark vom jeweiligen Verlauf der Kabelführung abhängig ist. Hierzu wird mit einer relativ kleinen Messladung im Schweisskondensator C1 über Zündung des Thyristors TH2 ein Hilfsstromkreis über die Messleitung LL32a und den Stützfuss 42 und über das Werkstück und das Erdkabel bestromt. Da die Messleitung 32a parallel zum Schweisskabel 31 verläuft, sind die Induktivitätsverhältnisse praktisch geich. Der Spannungs- oder Stromverlauf U(t), J(t) wird während der Entladung über die Messschaltung vom Prozessor gemessen und aus dem Zeitverhalten rechnerisch die Induktivität L bestimmt, da die weiteren dazu notwendigen Grössen C und R im Hilfsstromkreis bekannt sind.

Weiterhin wird durch entsprechende Entladevorgänge durch Zündung der Thyristoren TH3 bzw. TH4 über die Messadern 32b, c jeweils der Kontakt der Stützfüsse 41 und 43 überprüft und somit die senkrechte Lage des Schweisskopfes festgestellt.

In allen Fällen der Vorabmessungen werden die festgestellten Ergebnisse mit Grenzwerten verglichen und unter Umständen ein Alarmsignal AS1 ausgegeben. So kann zu geringe oder zu hohe Kapazität C bedeuten, dass der Multiplexer Mu1, die Dioden D2, D3 oder die Kondensatoren C1, 2, 3 fehlerhaft sind.

Zu hohe Induktivität L deutet auf eine ungünstige Kabelführung oder Erdung hin.

Fehlender Kontakt zeigt Schräglage oder falsche Positionierung oder eine isolierende Schicht unter den Stützfüssen an. Bei Vorhandensein einer automatischen Positioniervorrichtung kann diese Störung über die Datenübertragung weitergemeldet werden, um eine erneute Positionierung des Schweisskopfes zu veranlassen.

Auch bei der Einstellung der Betriebsparameter wird automatisch eine Kontrolle des Motors 67, des Potentiometers 70, des Netzteils NT und des Analog-Digitalwandlers vorgenommen, da diese Baugruppen, wie gezeigt, in Regelschleifen einbezogen sind und deren Versagen durch Nichterreichen des Sollzustandes der Regelung vom Prozessor mittels einer Zeitüberwachung ermittelt wird.

In den Regelkreisen festgestellte Fehler werden ebenfalls auf die Alarmgeber oder Anzeige ausgegeben.

Die dargestellte mikroprozessorgesteuerte Vorrichtung kann auch durch spezielle Schaltungen in Einzelheiten in bekannter Weise ersetzt werden. Die Steuerung durch einen Prozessor ermöglicht aber in sehr einfacher Weise die Anpassung an unterschiedliche Ausbaustufen und neue Erkenntnisse über die optimalen Zusammenhänge von Kennwerten und Betriebsparameter. So können neuartige Materialien, Bolzengeometrien und elektrische Ausrüstungen z.B. mit höheren Spannungen, vielen Kapazitätsstufen, langen Kabeln usw. ohne Schwierigkeiten durch Eingabe anderer Tabellen, Grenzwerte und Rechenvorschriften berücksichtigt werden oder umgekehrt diese systematisch durch Variation der Betriebsparameter ermittelt werden.

Im folgenden wird der Schweissvorgang dargestellt, und zwar wie er unter Verwendung der beschriebenen Vorrichtung abläuft und wie die dadurch gegebenen Zusammenhänge zwischen den Kennwerten und Betriebsparametern sich ergeben und welche charakteristischen Grössen und wie diese aus den gemessenen Signalen gewonnen werden.

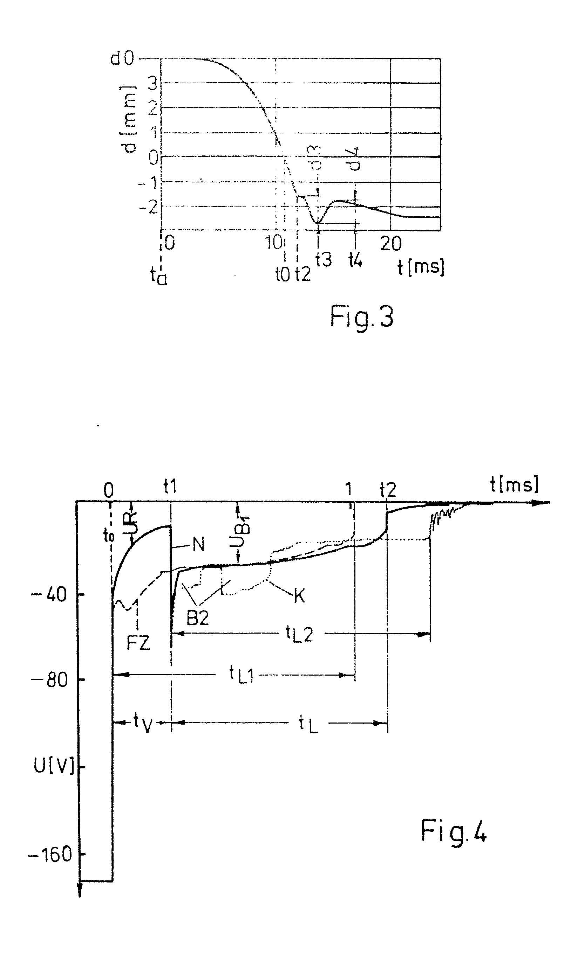

Die in Fig. 2 gezeigte Spitze 54 des Bolzens 5 befindet sich, wenn der Magnet 7 angezogen ist, im Abstand do über der Oberfläche 53 des Werkstückes. Wird nun der Magnetstrom abgeschaltet, drückt die Feder 62 den Schaft 61 und damit den Bolzen 5 in Richtung auf die Oberfläche 53. Der zeitliche Verlauf der Bewegung ist in Fig. 3 dargestellt. Am Schweisskopf kann ein Weggeber angebracht werden, dessen Ausgangssignal über ein Kabel (40, 40a) ebenfalls in den Messmultiplexer Mu2, Fig. 7, geführt wird. Durch die Auswertung von Verläufen mehrerer Bolzenbewegungen lässt sich die Federkonstante Fk, die Anfangskraft Ko der Feder und der richtige Abstand do des Bolzens von der Oberfläche vor der Auslösung des Magneten bestimmen. Der Abschnitt der Kurve zwischen dem Zeitpunkt ta und der Zeit to stellt eine bekannte Beschleunigungsparabel dar. Zum Zeitpunkt to stösst die Spitze 54 auf die Oberfläche 53 auf.

Da die Masse des Schaftes relativ gross ist gegenüber der Bolzenmasse, ist die Bewegung von der Bolzenart, d.h., dessen Material und Grösse, relativ unabhängig. Für den Schweissvorgang selbst ist der tatsächliche Verlauf der Bewegung bis zum Zeitpunkt to ohne Bedeutung. Lediglich die Auftreffgeschwindigkeit ist für den weiteren zeitlichen Verlauf der Schweissung bedeutsam.

Mit Auftreffen der Spitze auf der Oberfläche wird der Schweissstromkreis geschlossen und der Schweissstrom beginnt zu fliessen.

Durch Widerstanderwärmung erfolgt in einem Bruchteil einer Millisekunde eine explosionsartige Verdampfung der Spitze, so dass diese nur kurz während der Erwärmung gestaucht wird und dann der Bolzen sich mit seiner Unterseite 51 weiter der Oberfläche 53 nähert. Bis zum Auftreffen der Unterseite 51 brennt der gezündete Lichtbogen durch den Entladestrom, wobei durch dessen Energieaufnahme das Material am Bolzen und an der Oberfläche verflüssigt wird. Zum Zeitpunkt t2 wird der Bogen kurzgeschlossen, und der Bolzen in das Schweissbad eingedrückt. Es erfolgt ein schnelles Erkalten der Schmelze. Während dieser Zeit muss der Bolzen in die Schmelze gepresst werden. Die Rückprallbewegung darf erst nach Erstarren der Fügezone einsetzen. Die in Fig. 3 gezeigte geringe Rückprallbewegung d4 wird nach Erkalten der Schmelze nur von dem Schaft 61 und nicht vom Bolzen 5 ausgeführt. Aus der Analyse des Bolzenweges lässt sich somit ermitteln:

– Bei zu grosser Rückprallamplitude
Schweisszeit, d.i. die Bogenbrennzeit ist zu klein.

– Bei zu tiefem Eindringen d3 des Bolzens anschliessend an den Bolzenkurzschluss mit dem Werkstück; Schweisszeit ist zu gross.

Die Anfangskraft der Feder Ko muss demgemäss erhöht bzw. erniedrigt werden. Ist die Feder bis an den Anschlag vorgespannt bzw. gelockert, liegt ein Erlahmen vor oder der Abstand do ist falsch justiert. Es erfolgt Alarmmeldung.

Bei einer anderen Konstruktion des Kopfes könnte statt einer Verstellung der Anfangskraft der Feder auch eine Verstellung des Abstandes do, oder auch beide Möglichkeiten, vorgesehen werden.

Die Grenzwerte des Eindringens und des Rückprallweges sind abhängig von den Materialkonstanten und können relativ einfach ermittelt werden. Hierzu können vorab absolute Grenzwerte bestimmt werden, indem einerseits ohne Zündung bzw. Energiezufuhr ein Bolzen auf die Oberfläche gedrückt wird und andererseits mit extrem hoher Energiezufuhr die Oberfläche überhitzt wird. Die Alarmgrenzen liegen wesentlich unter diesen Werten; sie ergeben sich aus einer statistischen Auswertung einer zwischen den Randbedingungen für eine bestimmte Bolzenart, ein gewähltes Oberflächenmaterial und bei definiertem Oberflächenzustand systematisch durchgeführten Versuchsreihe. Ausserdem geben diese Messungen die kleinste Amplitudenkombination, z.B. Amplitudensumme, für den Eindring- und den Rückprallweg, der das Optimum anzeigt. Die Werte für den Eindring- und Rückprallweg dieses günstigen Falles mit Zugabe einer angemessenen Toleranz werden für die folgenden Schweissungen als Referenzwerte vorgegeben und auftretende Abweichungen zur schrittweisen Änderung der Betriebsparameter in Richtung der kleinsten Amplitudensumme genutzt.

Ausser der iterativen Approximation des Optimums kann vorab mittels der Analyse eines Bolzenweges d, wobei ein Bolzen, vorzugsweise ein geeichter Referenzbolzen ohne Spitze, auf die Oberfläche gedrückt wird, der Abstand do und die Anfangskraft Ko der Feder bestimmt werden, und durch mehrere solche Messungen kann bei unterschiedlicher vorgegebener Vorspannung, die Federkonstante aus der zeitlichen Abstandsänderung d bestimmt werden. Auf diese Weise erfolgt eine automatische Selbsteichung der Federmechanik und des Einstellmechanismus, und das Toleranzfeld ist weiter eingeengt.

Es ergibt sich aus den Vorversuchen der Zusammenhang der Auftreffgeschwindigkeit, die für die Schweisszeit massgeblich ist und der Anfangskraft Ko der Feder 62 bzw. dem Messwert, den das Potentiometer 70 liefert.

Eine noch grössere Aussagekraft als das Wegsignal d(t) haben die elektrischen Schweisssignale U(t), J(t) bezüglich der Einzelheiten des Ablaufs. Der Spannungsverlauf verschiedener Schweissungen, über die Schweissstelle gemessen, ist in Fig. 4 gezeigt. Die ausgezogene Kurve stellt den optimalen Fall dar.

Sobald zum Zeitpunkt t0 die Spitze die Oberfläche berührt, bricht die Spannung U(t) der Anfangsspannung Uo, auf die der Schweisskondensator C aufgeladen war, auf einen Wert zusammen, der sich im wesentlichen aus dem Spannungsabfall am Widerstand der Spitze ergibt, den der Strom erzeugt, der in seiner Grösse durch die Reihenschaltung vom Schweisskondensator mit der Induktivität und dem Widerstand des Zu- und Erdkabels, also einem anschwingenden Schwingkreis, bestimmt ist.

Die Spannung am Kondensator bzw. der Energieeinsatz ist dabei so hoch, dass mit einem geringen Bruchteil davon die Spitze durch Widerstandserwärmung auf die Schmelztemperatur gebracht ist und die Schmelzenergie des Spitzenmaterials in der Spitze umgesetzt ist. Zu diesem Zeitpunkt t1 explodiert die Spitze und die Spannung steigt in extrem kurzer Zeit, da der Strom durch die Leitungsinduktivität bedingt über den entstehenden Spalt getrieben wird und dort einen Lichtbogen zündet.

Sobald der Bogen brennt, entsteht eine Bogenspannung einer charakteristischen, materialabhängigen Grösse von ca. 25V mit einem zusätzlichen abstandsabhängigen Anteil, so dass die Brennspannung des Bogens UB1 etwa zwischen anfangs 35V und am Ende 25V beträgt. Die Energieaufnahme ist im Bogenbereich somit im wesentlichen linear vom Stromverlauf abhängig, da die Stromabhängigkeit der Bogenspannung UB1 nur gering ist.

Zum Zeitpunkt t2 des Bolzenkurzschlusses bricht die Spannung U(t) bis auf einen geringfügigen Rest zusammen, und die restliche Energie wird in der Zuleitung verbraucht.

Ein Spannungsverlauf nach der gestrichelten Kurve zeigt eine Frühzündung FZ an. Dieser Fall tritt auf, wenn der Oberflächenzustand nicht optimal ist und z.B. Korrosion stattgefunden hat oder an der Spitze Grat vorhanden ist. Besonders in diesem Fall ist der Energieverbrauch durch die längere Bogenbrennzeit erhöht und ein vorzeitiges Erlöschen des Lichtbogens nach der Zeit tL1 kann auftreten, sofern die Energie nicht ausreicht, den Bogen brennen zu lassen, bis der Bolzenkurzschluss erfolgt. Da in einem solchen Fall vorzeitiges Erkalten des Materials erfolgt und eine schlechte Haltbarkeit des Gefüges dadurch entsteht, muss der Energieeinsatz durch Vorwahl einer grösseren Kapazität oder Erhöhung der Schweissspannung Uo vergrössert werden. Eine Verringerung der Schweisszeit durch Erhöhung der Anfangskraft Ko der Feder empfiehlt sich nicht, da die Spitze dann nicht definiert aufgrund zu hoher Verformung zur Explosion kommt. Es muss also grundsätzlich durch ausreichenden Energieeinsatz und geeignete Kapazitätsvorwahl dafür gesorgt werden, dass der Lichtbogen bis zur Zeit t2 brennt.

Zur Vermeidung von Frühzündungen, insbesondere durch Grat an der Spitze, wird nach einer anderen Betriebsart der Bolzen erst auf die Oberfläche gepresst und dann die Schweissspannung angelegt. Dabei wird der Bolzen zur Vermeidung einer Stauchung der Spitze mit geringer Geschwindigkeit aufgesetzt und dann der Anpressdruck erheblich erhöht, damit die Schweisszeit wegen der nach der Explosion der Spitze anfangs langsam zunehmenden Bolzengeschwindigkeit nur im vertretbaren Mass gegenüber der üblichen Betriebsart verlängert wird. Insbesondere wegen der Verlängerung der Schweisszeit muss bei diesem Verfahren durch geeignete Wahl der Induktivität, der Kapazität und der Schweissspannung das Brennen des Bogens bis zum Eintauchen des Bolzens in die Schmelze garantiert sein. Der Stromanstieg bzw. die Zeit für die Verdampfung der Spitze hingegen ist von untergeordneter Bedeutung für die Vorwahl der Betriebsparameter. Das Verfahren nach der Erfindung kann in gleicher Weise bei dieser Betriebsart eingesetzt werden, wobei lediglich die geänderten funktionalen Zusammenhänge zur Bestimmung der Betriebsparameter und Kennwerte eingeführt werden müssen. Ein automatischer Wechsel zwischen beiden Betriebsarten ist zweckmässig, wenn dieser durch die Auswertung der Häufigkeit von Frühzündungen angezeigt ist.

Eine weitere qualitätsmindernde Störung zeigt der punktiert dargestellte Kurvenverlauf in Fig. 4. Die Spannung im Bereich des Lichtbogens UB1 steigt und fällt in Stufen B2, wodurch eine Reihenschaltung eines zweiten Lichtbogens im Entladekreis angezeigt ist. Dieser zweite Lichtbogen entsteht im allgemeinen zwischen Futter und Bolzen, wenn Verunreinigungen durch Späne oder Abnutzung aufgetreten sind. Ein Auswechseln des Futters ist somit durch Alarmmeldung «Kontaktstörung K» an den Bediener oder den Schweissautomaten angezeigt, sobald stufenweise Erhöhungen oder Erniedrigungen der Bogenbrennspannung auftreten.

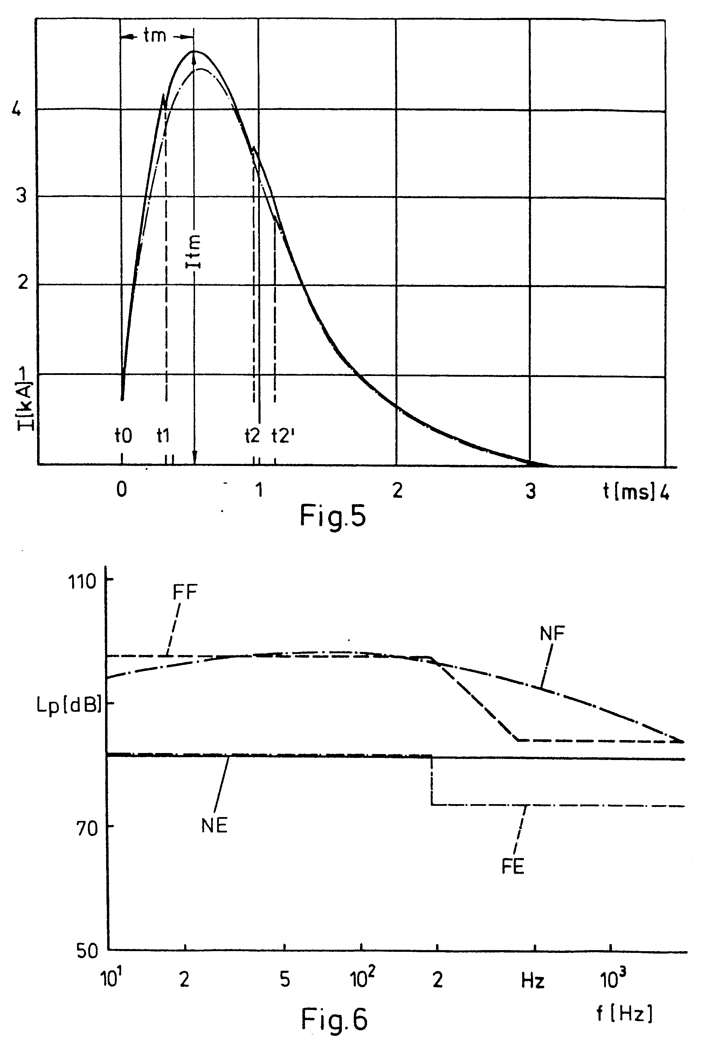

Weiterhin zeigt der punktierte Kurvenverlauf eine erhebliche Verlängerung der Lichtbogenbrennzeit tL2, verglichen zur normalen Lichtbogenbrennzeit tL. Eine Erhöhung der Anfangskraft Ko der Feder ist dadurch angezeigt. Die eingesetzte Energie ist auch für die lange Bogenbrennzeit und den Kontaktlichtbogen ausreichend, da der Bogen durch den Bolzenkurzschluss erlischt, wie aus dem Abschnitt langsam abklingender Spannung nach dem Abfall der Bogenspannung zur Zeit t2', Fig. 5, zu ermitteln ist. Die Messung der Schweissspannung und Analyse der Unstetigkeiten des Kurvenverlaufs ist praktisch mit der Problematik von sporadisch auftretenden eingesteuerten Störungen behaftet, da der Schweissstromkreis durch seine grosse räumliche Ausdehnung als Antenne für starke wechselnde Magnetfelder wirkt und z.B. mehrere Schweissanlagen oder starke Antriebe Störungen verursachen können, die den zu ermittelnden Spitzen und Stufen ähneln. Diese Störungen treten allerdings stets paarweise auf und werden durch Filter, die im Eingang des Messwerkes liegen, oder durch einen Filteralgorithmus programmässig im Prozessor beseitigt. Die Zeitkonstante der Filter wird zweckmässig in der Grössenordnung gewählt, die der Zündzeit des Lichtbogens entspricht, die aus der Spannungskurve U(t) ersichtlich ist. Weiterhin stellt der Lichtbogen einen Widerstand mit negativem Koeffizienten dar, so dass sehr hochfrequente Schwingungen durch ihn angefacht werden können, die bei hoher zeitlicher Auflösung der Messung störend wirken und deshalb ausgefiltert oder mit bekannten Mitteln unterdrückt werden. Die genannten Filter sind bei der Auswertung des Verlaufes des Schweissstromes nicht erforderlich, da dieser durch die Induktivität L weitgehend stabilisiert ist.

Die Höhe der Bogenbrennspannung gibt bei bekanntem Abstand und bekanntem Strom eine Aussage über den Oberflächenzustand. Abhängig vom Oberflächenzustand ist der Widerstand des Lichtbogens verändert, der Teil des Widerstandes im Schweissstromkreis ist.

Der Widerstand R des Schweissstromkreises und die Bogenspannung kann bei bekannter Induktivität auch aus dem Stromabfall nach Überschreiten des Maximalstromes bzw. nach völliger Entladung des Kondensators bestimmt werden, da sich dann die Induktivität durch einen Stromverlauf mit einem linearen Anteil, der durch die Gegenspannung bestimmt ist, und mit einem exponentiellen Anteil, der durch den Widerstand bestimmt ist, entlädt. Die völlige Entladung des Schweisskondensators kann über die Messleitung 39/39a gemessen werden. Alternativ kann auch eine Bestimmung des Stromflusseinsatzes an der Diode D beobachtet werden.

Ein Stromverlauf für den Normalfall einer guten Schweissung mit gereinigter Oberfläche ist mit der ausgezogenen Kurve in Fig. 5 dargestellt. Diese Kurve liefert gegenüber dem Spannungsverlauf in Fig. 4 weitere wichtige charakteristische Grössen, die zur Bestimmung der Betriebsparameter geeignet sind, und die die Bestimmung von Ist-Kennwerten ermöglichen. Wie in den vorher gezeigten Fällen kann der Spitzenkontaktzeitpunkt t0 und damit die Zeit der Bolzenbewegung über den Bolzenabstand do ermittelt werden, da der Auslösezeitpunkt bekannt ist. Aus dem Stromanstieg zur Zeit t0 kann die Leitungsinduktivität L als Ist-Kennwert bestimmt werden, da die Schweissspannung Uo bekannt ist. Die errechnete Induktivität wird mit einem Grenzwert verglichen und bei dessen Überschreitung ein Alarmsignal gegeben. Weiterhin ist an der Stromverlaufskurve eine Unstetigkeit zur Zeit t1 festzustellen; das ist der Zeitpunkt in dem die Spitze explodiert.

Die Dauer des Zeitabschnitts t1–t0 ist im wesentlichen bestimmt durch die Spitzenabmessungen Sa, das Material der Bolzenart Ba und die entsprechende Verdampfungsenergie, die durch das Integral über das Quadrat des Stromes J(t) bis zum Explosionszeitpunkt t1 bestimmt ist. Da der Strom weitgehend unabhängig ist vom Widerstand der Spitze, ergibt sich aus der eingebrachten Verdampfungsenergie bzw. bei unverändertem Stromverlauf aus der Zeitdifferenz t1–t0 ein Zusammenhang zum Durchmesser der Spitze, d.h. zu dem wesentlichen Anteil des Kennwertes «Spitzenabmessung Sa». Abhängig davon bzw. unmittelbar aus der Zeitdifferenz kann der Betriebsparameter «Ladespannung Uo» bestimmt werden, da die physikalischen Zusammenhänge eindeutig bekannt sind.

Eine weitere Unstetigkeit der Stromverlaufskurve ist zum Zeitpunkt t2 vorhanden. Diese zeigt den Bolzenkurzschluss an. Somit kann die Bogenbrennzeit t2–t1 oder im Störungsfall bei Frühzündung wie bereits bechrieben t2'–t0 als charakteristische Grösse aus dem Stromverlauf bestimmt werden und die bereits oben dargestellten Auswertungen zur Gewinnung von Ist-Kennwerten und neuen Betriebsparametern vorgenommen werden.

Der Stromverlauf liefert weitere charakteristische Grössen, nämlich den Zeitpunkt tm des Strommaximums Jtm, die Stromhöhen Jt1, Jt2 zu den Zeitpunkten t1 und t2, den Maximalstrom Jtm und die Gesamtdauer der Entladung.

Aus dem Integral über den Schweissstrom J(t) mal der Bogenspannung UB1, die im wesentlichen als konstant angesehen werden kann, über die Bogenbrennzeit t2–t1 ergibt sich die umgesetzte Schweissenergie. Die optimale Schweissenergie ist weitgehend durch die Bolzenart Ba und das Oberflächenmaterial Obm und zu einem geringeren Anteil durch den Oberflächenzustand Obz bestimmt. Es ist somit zweckmässig, die in den Schweisskondensator C geladene Energie weitgehend in Schweissenergie umzusetzen. Andererseits soll aus oben genannten Gründen der Lichtbogen nicht mangels Energie verlöschen. Es ist somit zweckmässig den Stromimpuls, der sich durch die Schwingkreiselemente in seinem wesentlichen zeitlichen Verhalten ergibt, so in seiner Form zu bestimmen, dass die Zeit des Strommaximums in die Bogenbrennzeit, d.h. zwischen die Zeitpunkte t1 und t2 fällt. Dies geschieht durch die Kapazitätsvorwahl Cv, durch die die Frequenz des Schwingungssystems zusammen mit der gemessenen oder ansonsten bekannten Induktivität L bestimmt ist. Da die Kapazitätsvorwahl im allgemeinen nur wenige Stufen besitzt, erfolgt abhängig von der Vorwahl die Bestimmung der Ladespannung Uo des Schweisskondensators, da diese unmittelbar die Höhe des Stromes J(t) und damit auch des Maximalstromes Jtm bestimmt.

Die Dauer der Lichtbogenbrennzeit t2–t1 bei korrekter Zündung, die aus dem Strom- oder Spannungsverlauf bestimmt wird, ist einerseits durch die Bolzenvorschubgeschwindigkeit als auch die Länge der Spitze bestimmt. Somit lässt sich dieser Anteil des Kennwertes «Spitzenabmessung Sa» aus diesen charakteristischen Grössen bestimmen und dementsprechend die Anfangskraft Ko der Feder neu festlegen.

In Fig. 5 ist in strichpunktierter Linienführung der Fall der Frühzündung dargestellt, bei dem keine Unstetigkeit vor dem Strommaximum auftritt. Durch die früher auftretende Bogenspannung wird mehr Energie in die Schweissstelle eingebracht, was an dem niederigeren Verlauf der Kurve zu erkennen ist. In dem Beispiel ist auch der Bolzenkurzschlusszeitpunkt t2' zeitlich nach hinten verschoben und die Restenergie, wie aus dem zugehörigen Stromwert Jt2' zu ersehen ist, geringer.

Bei häufigen Frühzündungen und einem Oberflächenzustand Obz mit Korrosion ist eine erhöhte Energieumsetzung in der Schweissstelle gefordert, da sich anhand von Vesuchen gezeigt hat, dass dadurch eine Qualitätseinbusse weitgehend vermieden werden kann.

Mit der Analyse des Verlaufs des Schweissstromes J(t) und den daraus gewonnenen charakteristischen Grössen lassen sich nicht nur rein formal Fehler über Vergleich mit Grenzwertkriterien für die verschiedenen Zeitpunkte t0, t1, t2 ermitteln, sondern auch sehr einfach die aufgenommenen Energiemengen für die Verdampfung der Spitze und den Schweissvorgang bestimmen und durch Veränderung der Betriebsparameter dem bekannten Optimum entsprechend wählen.

Ergänzend zu den gezeigten Signalverläufen wird vorteilhaft auch das Schweissgeräusch bzw. der Schalldruck analysiert. Dieses gestattet, ergänzende Informationen über die Ist-Kennwerte, insbesondere bezüglich des Oberflächenzustandes Obz, zu gewinnen. Dies ist insbesondere dann vorteilhaft, wenn die Schweissung durch Automaten oder unerfahrenes Personal erfolgt, die eine Beurteilung des Oberflächenzustandes nicht beherrschen. Es hat sich gezeigt, dass die niederfrequenten und hochfrequenten Anteile charakteristisch vom Oberflächenzustand abhängen.

In Fig. 6 sind verschiedene Fälle der Spektralverteilung dargestellt. Die durchgezogene Linie stellt einen Fall mit normaler Zündung und entfetteter Oberfläche NE dar. Die Schalldruckverteilung ist über einen weiten Bereich gleich.

Die strichpunktierte Linie ist bei Normalzündung auf einer gefetteten Oberfläche NF gemessen. Der Schallpegel ist durch die Explosion des Fettdampfes stark erhöht.

Die gestrichelte Linie ist durch Einleitung einer Frühzündung auf einer gefetteten Oberfläche FF erzeugt, wodurch im oberen Frequenzbereich der Schallpegel merklich abgesenkt ist.

In ähnlicher Weise ergibt sich bei der doppeltgestrichelt-punktierten Linie, die mit Frühzündung auf einer entfetteten Oberfläche FE erzeugt wurde, eine Absenkung des Schallpegels im oberen Frequenzbereich.

Nach dem bereits oben gesagten, dass bei Frühzündung und bei kontaminierter Oberfläche ein erhöhter Energieeinsatz in die Schweissstelle vorteilhaft ist, wird das Mass des Schallpegels im unteren Frequenzbereich und das Verhältnis des Schallpegels im unteren zu dem im oberen Frequenzbereich insbesondere für die Bestimmung des Ist-Kennwertes des Oberflächenzustandes Obz oder auch der neuen Betriebsparameter Ko, Uo, Cv über den Zusammenhang der Festlegung des Energieeinsatzes vorteilhaft verwendet.

Für die Auswertung der zeitlichen Signalverläufe werden entweder alle Signale in einem zeitlichen Raster, dessen Auflösung mindestens etwa einem Zehntel des Zeitintervalles t1–t0 entspricht, digitalisiert in den Prozessor übernommen oder durch geeignete bekannte Filter werden die Zeitpunkte der Unstetigkeiten und des Maximums ermittelt, und getriggert durch die Filtersignale werden vom Prozessor die zu diesen Zeitpunkten vorliegenden Grössen vom Prozessor übernommen.

Ebenso kann das Schalldrucksignal Lp(t) nach unterem und oberem Spektralbereich durch Bandpässe gefiltert und über die Schweisszeit jeweils integriert und anschliessend vom Prozessor übernommen werden.

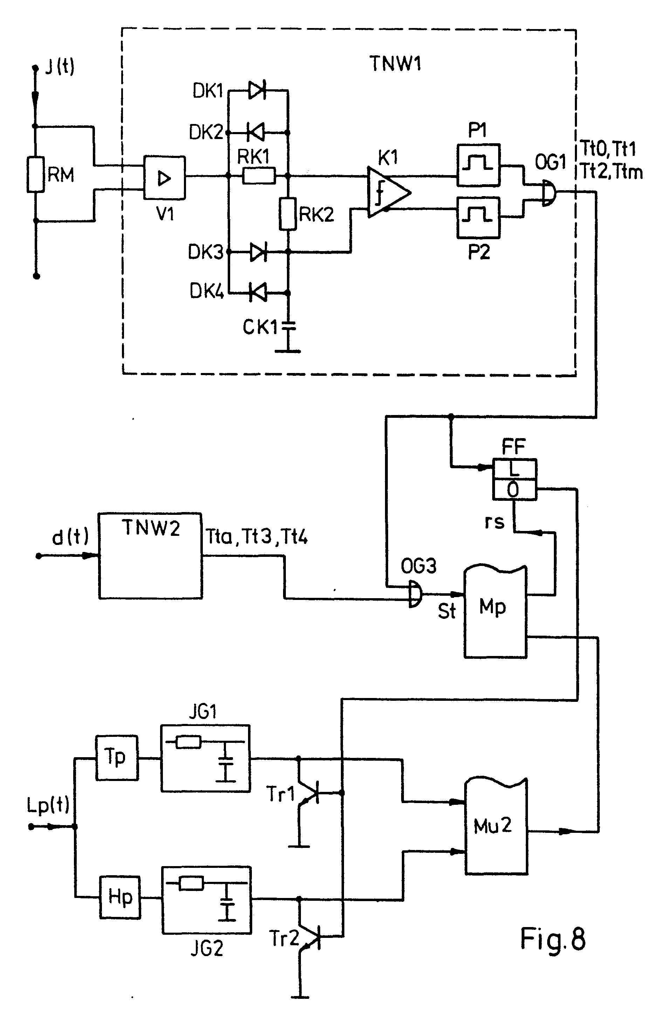

Zusatzschaltungen zur Schaltungsanordnung Fig. 7 sind in Fig. 8 dargestellt.

Das Stromsignal J(t) wird einem Triggernetzwerk TNw1 zugeführt. Es wird von dem Messwiderstand RM mit einem Differentialverstärker V1 abgenommen und geeignet verstärkt einem mit geringer Hysterese behafteten Komparator K1 zugeführt, und zwar dem einen Eingang über einen Widerstand RK1 und zwei gegensinnig dazu parallel geschaltete Dioden DK1, DK2 und dem zweiten, invertierenden Eingang über ein speicherndes Netzwerk mit dem Kondensator CK1 und zwei gegensinnig geschalteten Dioden DK3, DK4. Dadurch folgt das Signal des invertierenden Eingangs bei einem Richtungswechsel des Signals nur mit einer Hysterese, die den beiden Diodendurchlassspannungen entspricht. Da der erste Eingang dem Signal jeweils unmittelbar folgt, wird bei Überschreiten der Hysterese des Komparators dieser jeweils umgeschaltet. Mit den Flanken der Ausgänge werden Impulsschaltungen P1, P2 getriggert, die im Odergatter OG1 zusammengeführt sind, so dass eine Impulsserie mit Triggersignalen Tt0, Tt1, Ttm, Tt2 an dessen Ausgang entsteht. Ein entsprechendes Triggernetzwerk TNw2 ist für das Abstandssignal d(t) vorgesehen. Es liefert zu Beginn der Bewegung im Zeitpunkt ta und zu den Maxima- und Minimazeiten der Bewegung t3, t4 jeweils einen Triggerimpuls Tta, Tt3, Tt4. Alle Triggerimpulse werden in einem Oder-Gatter OG3 zusammengeführt und als Startsignal St oder auch Interruptsignal dem Prozessor PR zugeführt, der bei Erkennen dieser Signale die zugehörigen Messwerte abfragt und zur Auswertung einspeichert.

Das Schalldrucksignal Lp(t) wird parallel dem Tiefpass Tp und Hochpass Hp zugeführt und deren Ausgangssignale werden in den Integratoren IG1, IG2 mit einer gegen die Schweisszeit grossen Zeitkonstanten integriert. Die Integratoren werden durch Transistoren Tr1, Tr2 an den Ausgängen durch ein Flip Flop FF, das durch das Triggersignal Tt0 in den Eins-Zustand geschaltet wird, für die Schweisszeit freigegeben.

Die Ausgangssignale der Integratoren IG1, IG2 werden Eingängen des Messmultiplexers Mu2 zugeführt und nach dem Schweissvorgang abgefragt, worauf das Flipflop vom Prozessor zurückgesetzt wird.

Diese Schaltung ist nur ein Beispiel für die vorhandenen Möglichkeiten zur Triggersignalerzeugung und Vorauswertung der Signale. So kann statt des Stromverlaufs auch der Spannungsverlauf dazu benutzt werden.

Weiterhin können die zu den Zeiten gehörigen Messwerte auch analog gespeichert und verarbeitet werden, und die Zeitintervalle, die für die Bestimmung der Betriebsparameter von Bedeutung sind, können in Zeitzählern oder in Integratoren als Analogwerte gespeichert werden.

Weiterhin lassen sich die Messfühler durch äquivalente Arten ersetzen.

So kann das Potentiometer 70 durch einen induktiven, kapazitiven oder optischen Weggeber ersetzt werden, oder der Motor selbst kann als Schrittmotor ausgeführt sein, wodurch sich der Weggeber erübrigt, da die Position durch Schrittzählung bestimmt wird. Weiterhin kann statt des Strommesswiderstandes RM ein bekannter induktiver Stromübertrager verwendet werden. Weiterhin können die Stützfüsse 41, 42, 43 über induktive Übertrager mit den Messstromzuführungen 32a, b, c verbunden werden. Dies hat den Vorteil, dass die Stützfüsse galvanisch mit dem Schweisskopf verbunden werden können, was eine ansonsten sicherheitstechnisch erforderliche Isolierung des Schweisskopfes erübrigt.

Die Optimierung des Schweissvorganges ist ein mehrdimensionales Problem mit Variablen, die mit statistischen und/oder systematischen Toleranzen behaftet sind. Die vorteilhaft vorgesehene iterative Approximation führt zu einem eindeutigen Optimum, weil die Einflüsse der Toleranzen der einzelnen Kennwerte anhand der geeignet gewählten charakteristischen Grössen weitgehend unabhängig voneinander bestimmt werden und der Einfluss der einzelnen Betriebsparameter auf die charakteristischen Grössen ebenfalls weitgehend voneinander unabhängig ist, so dass eine Kompensation der Abweichungen der Kenngrössen durch die in der weiteren Beschreibung zu Fig. 9 und 10 dargestellten Änderung der Betriebsparameter so gezielt erfolgt, dass nur wenige Iterationsschritte erforderlich sind. Die Zusammenhänge der wesentlichen Abhängigkeiten der Variablen und die untergeordnete und übergeordnete Regelung, die sich daraus vorteilhaft ergibt, ist in Fig. 9 zusammengestellt.

Dabei sind die verschiedenen funktionalen Zusammenhänge mit f1 bis f13 bezeichnet und die jeweils entscheidend beeinflussenden Grössen sind dem Argument der Funktion angegeben. Die Spitzenabmessung Sa ist nach ihren Anteilen Spitzendurchmesser Ds und der Spitzenlänge S1 aufgeteilt. Die Funktionen f1 bis f13 sind gem. den Ausführungen zu den Fig. 2 bis 6 teils experimentell, teils aus einfachen physikalischen Zusammenhängen bestimmt.

Für die Aufprallgeschwindigkeit ist die Grösse vt0 und für die Energie im Lichtbogen ist das Zeichen Eb als Hilfsgrösse eingeführt. Mit R ist der wirksame Widerstand im Schweissstromkreis bezeichnet.

Es ist aus den zwei Bestimmungsfunktionen für die Ladespannung Uo des Schweisskondensators zu erkennen, dass diese entweder zur Erfüllung der Schmelzzeitforderung 5.1 bei hoher Induktivität L der Zuleitung durch die Funktion f6 bestimmt ist oder sich aus der Forderung nach ausreichender Energie für den Bogen Eb und den Leitungsverlusten am Widerstand R des Schweissstromkreises bestimmt. Dieser Widerstand R ist nicht nur in den Zuleitungen, sondern auch im Kondensator, dem Werkstück und dem Lichtbogen verteilt enthalten und deshalb nicht exakt vorherzubestimmen; sondern er ergibt sich aus der Messung Pos. 5.2.

Die alternative Festlegung der Ladespannung Uo nach Funktion f6 oder f7 bedeutet, dass eine der gestellten Forderungen nicht exakt erfüllt ist und jeweils nur die entscheidende Forderung berücksichtigt wird. Insbesondere bei hoher Induktivität L führt die Forderung nach einem steilen Stromanstieg zu einer hohen Ladespannung Uo, wodurch ein grosser Teil der Energie in dem Widerstand R statt im Lichtbogen verbraucht wird, da der Strom entsprechend der Spannung Uo zu einem hohen Wert Jtm ansteigt und der Verlust im Widerstand R quadratisch und im Lichtbogen linear vom Strom abhängt. Eine Beschränkung des Energieeinsatzes im Lichtbogen erfolgt über die Beeinflussung der Schweisszeit durch die Parameter L, C und R.

Eine vorteilhafte Weiterentwicklung des Verfahrens unter Verwendung der gleichen Vorrichtung ist in Fig. 10 dargestellt.

Die Kondensatoren C1; C2, C3 werden auf unterschiedliche Spannungen aufgeladen, und diese Spannungen Uo(C1); Uo(C2, 3) werden von unabhängigen Kriterien gesteuert. Da die Kondensatoren C2, C3 durch Dioden D2, D3 jeweils in einer Richtung entkoppelt sind, kann die Ladespannung jeweils in einen Kondensator mit niedrigerem Index höher sein als im vorhergehenden, und die Entladung erfolgt erst aus dem Kondensator mit hoher Spannung bis Spannungsgleichheit entsteht. Es ist somit vorteilhaft möglich, den Kondensator C1 auf die nach Funktion f6' bestimmte Ladespannung nachzuladen und eine andere Ladespannung nach einer Funktion f7', die entsprechend der Ladung im ersten Kondensator modifiziert ist, in die übrigen Kondensatoren C2, 3 usw. je nach Vorwahl Cv einzuspeisen. Es ergibt sich dadurch eine weitgehende Entkopplung der Regelvorgänge, wie in Fig. 10 gezeigt ist.

Die bei der Entladung entstehende Stromverlaufskurve ist in diesem Fall steil ansteigend und im mittleren Teil flacher verlaufend, entsprechend einer Schwingung niedrigerer Frequenz und Amplitude, wodurch der Spitzenstrom, der die hohen Leitungsverluste bringt, vermindert ist. Die Energieumsetzung in der Schweissstelle entspricht dadurch dem Sollwert, der für gute Qualität der Schweissung erforderlich ist. Eine Rückkopplung zu Parametern, die die Schweisszeit bestimmen, entfällt dadurch.

Es lässt sich aus den Fig. 9 und 10 leicht erkennen, dass einzelne Messungen z.B. Pos. 3.3; 5.3; 5.4; 5.5 entfallen können, ohne dass das Verfahren insgesamt versagt.

Die vorgesehenen Grenzwertvergleiche und die Alarmsignalerzeugung ist nicht in den Fig. 9 und 10 dargestellt, um die Übersichtlichkeit nicht zu beeinträchtigen. Ebenso wie diese ist die Mittelwertbildung in einer getrennten Darstellung in Fig. 11 gezeigt.

Die dargestellten Messungen können, wie oben beschrieben, durch äquivalente ersetzt werden, und die charakteristischen Grössen und Hilfsgrössen, die der Anschaulichkeit wegen gewählt wurden, können ebenfalls durch äquivalente ersetzt werden, ohne dass das Prinzip der Erfindung berührt wird.

Trotz der verhältnismässig guten Entkopplung der Regelkreise ist es zur Vermeidung von

– Regelschwingungen,

– einer Einregelung auf ein Nebenoptimum oder

– dem Herauslaufen aus dem Konvergenzbereich

vorteilhaft, Dämpfungs- und Begrenzungsmassnahmen vorzusehen, wie dies durch eine fortlaufende Mittelwertbildung und eine Grenzwertabfrage und Begrenzung für die Mess- und Kennwerte erfolgt. An dem Beispiel für einen Messwert Mw, der auch ein Zeitintervall, z.B. die Bogenbrennzeit t2–t1, sein kann; und einen daraus abgeleiteten Kennwert Kw ist das Verfahren in seinen einzelnen Schritten in Fig. 11 dargestellt.

Der ermittelte Messwert wird auf die Einhaltung vorgegebener unterer und oberer Grenzwerte Mwgu, Mwgo geprüft und bei deren Über- oder Unterschreitung eine Fehler- oder Alarmmeldung abgegeben, die unter Umständen auch zur Charakterisierung des Oberflächenzustandes Obz o.ä. ausgewertet wird. Soweit er in den Grenzen liegt, wird der Messwert unverändert gespeichert, aber bei Grenzüberschreitung wird der entsprechende Grenzwert zur Mittelwertbildung nach Charge, Werkstück, Pos. Nr. usw. abgespeichert. Dann wird aus einer vorgegebenen Anzahl n der letzten Messwerte der Mittelwert Mwm und die Streuung Mwstr bestimmt. Aus diesen Werten werden automatisch angepasste Grenzen, die aber weiter als die Streuung auseinander liegen, für die folgende Messung bestimmt. Auf diese Weise tritt eine Konvergenz sein, und fehlerhafte Abweichungen werden mit grösserer Sicherheit entdeckt. Durch die Fortschreibung der Mittelung über eine vorgegebene Anzahl Messungen erfolgt eine automatische Adaption der Mittelwerte Mwm an mittlere und an systematische Abweichungen vom Normwert. Um eine erhebliche systematische Abweichung festzustellen, sind die Grenzwerte Mwg u, o für den Vergleich fest, und nur die Grenzwerte M'wg u, o für die Begrenzung sind adaptiv aus dem Mittelwert Mwm und der Streuung Mwstr abgeleitet.

Im Schritt 5 wird der Kennwert Kw aus dem Messwert Mw über eine Funktion f19, die eine der Funktionen f1 bis f14 in den Figuren 9 und 10 ist, gebildet. Unter Umständen werden mehrere Messwerte in oben genannter Weise aufbereitet und mit der Funktion entsprechend verknüpft.

Der Kennwert wird dann in den Schritten 6 und 7 in entsprechender Weise wie der Messwert in den Schritten 3 und 4 verarbeitet. Die Indizes an den Bezeichnungen sind analog für beide Fälle gewählt. Der mittlere Kennwert Kwm wird im Schritt 8 als Ist-Kennwert Kw-ist eventuell zusammen mit weiteren Kennwerten zur Bestimmung des Betriebsparameters Bp benutzt und dieser nochmals einer Prüfung auf Einhaltung von Grenzwerten Bpgu, o unterworfen.

Es ist selbstverständlich möglich, bei bekanntem Verhalten der Vorrichtung oder der zu bearbeitenden Materialien einen Teil der Schritte wegzulassen, ohne dass das Verfahren dadurch grundsätzlich geändert wird.

Die Regelungsverfahren nach Fig. 9 und 10 und die Signalverarbeitung nach Fig. 11 ergänzen sich jeweils vorteilhaft in ihrer Gesamtwirkung. Die entsprechenden Funktionen werden aus bekannten physikalischen oder experimentell ermittelten tendenziellen Zusammenhängen bestimmt. Eine exakte mathematische Formulierung des physikalischen Gesamtzusammenhanges ist nicht erforderlich, da das adaptive Verhalten einer nach dem Verfahren arbeitenden Vorrichtung das Fehlen einer exakten Funktion ausgleicht, sofern nur die Abhängigkeit der Variablen in ihrer Tendenz ausreichend bestimmt ist.

1.      Positionierung; Eingabe: Pos, Pos Nr, Charge, Werkstück

2.1.    Eingaben: Obm, Obz, Sa:Sd, SI; Ba, Fk, R

2.2.    Messungen: C1, C2, C3..., L

3.1.    f1 (Obm, SI, Ba, L, C, R) = vto-soll

3.2.    Ko = F2 (vto-soll, do, Fk)

3.3.    Messung: do-ist, d(t) → vto-ist;
        f3 (vto-ist) = do-ist, Fk-ist

3.4.    Messung: t2–t1; f4 (t2–t1) = SI-ist

4.      Cv = f5 (L, Obm, Obz, Ba, C1, C2, C3...)

5.      Uo = |f6 (L, Sd, Ba)
        |f7 (Eb-soll, Cv, R); Eb soll = f8 (Obm, Obz, Ba)|
        |max

5.1.    Messung: t1–t0; f9 (t1–t0) = Sd-ist

5.2.    Messung: Jt1, Jtm, Jt2; f10 (Jt1, Jtm, Jt2)     = R-ist

5.3.    Messung: Utm, dtm;      f13 (Utm, Jtm, dtm)    = Obz-ist

5.4.    Messung: Lpn, Lph;      f11 (Lph, Lpn)          = Obz-ist

5.5     Messung: d3, d4;        f12 (d3, d4)            = Obm-ist

Fig. 9

1.    Positionierung; Eingabe: Pos, Pos Nr, Charge, Werkstück
2.1.    Eingaben: Obm, Obz, Sa:Sd, Sl; Ba, Fk, R
2.2.    Messungen: C1, C2, C3..., L
3.1.    f1′ (Obm, Sl, Ba) = vto-soll
3.2.    Ko=f2 (vto-soll, do, Fk)
3.3.    Messung: do-ist, d(t)→vto-ist;
       f3 (vto-ist) = do-ist, Fk-ist
3.4.    Messung: t2–t1, f4 (t2–t1) = Sl-ist
4.    Cv = f5′ (L, Obm, Obz, Ba, Ca, C2, C3..., Uo(C1))
5.a    Uo (C1) = f6′ (L, Sd, Ba)
5.1.    Messung: t1–t0; f9 (t1–t0) = Sd-ist
5.b    Uo (C2, 3...) = f7′ (Eb-soll, Cv, R, Uo(C1);
       Eb-soll = f8 (Obm, Obz, Ba)
5.2.    Messung: Jt1, Jtm, Jt2; f′10 (Jt1, Jtm, Jt2)    = R-ist
5.3.    Messung: Utm, dtm;    f13 (Utm, Jtm, dtm)    = Obz-ist
5.4.    Messung: Lpn, Lph;    f11 (Lph, Lpn)    = Obz-ist
5.5.    Messung: d3, d4;    f12 (d3, d4)    = Obm-ist

Fig. 10

1.    Eingabe: Charge, Werkst., Pos.-Nr., Kwgu, Kwgo, Mwgu,
Mwgo
2.    Eingabe: Messwert Mw
3.1.    Vergl.: Mwgu < Mw < Mwgo, nein→Alarm AS
3.2.    Begrenzung: M′wgu |Mw| M′wgo = M′w
4.1.    Speichern: M′w (Charge, Werkst., Pos.-Nr.)
4.2.    Mitteln: $\frac{1}{n} \sum\limits_{x-n}^{x}$ M′w = Mwm
4.3.    Streuung: f14 (M′w x... (x–n)) = Mwstr
4.4.    f15, 16 (Mwm, Mwstr) = M′wgu, M′wgo
5.    f19 (Mwm) = Kw
6.1.    Vergl.: Kwgu < Kw < Kwgo, nein→Alarm AS1
6.2.    Begrenzung: K′wgu |Kw| K′wgo = K′w
7.1.    Speichern: K′w (Charge, Werkst., Pos.-Nr.)
7.2.    Mitteln: $\frac{1}{m} \sum\limits_{x-m}^{x}$ K′w = Kwm = Kw-ist
7.3.    Streuung: f20 (K′w x...(x − m)) = Kwstr
7.4.    f17, 18 (Kwm, Kwstr) = K′wgu, K′wgo
8.    f21 (Kw-ist) = Bp
8.1.    Vergl.: Bpgu < Bp < Bpgo, nein→Alarm AS2
9.    Ausgabe: Kw-ist, Kwstr, AS, AS1, AS2, Bp

Fig. 11

| Kennwerte | |
|---|---|
| Ba | Bolzenart |
| Obm | Oberflächenmaterial, Blechart, Blechstärke |
| Obz | Oberflächenzustand |
| Sa | Spitzenabmessungen, Spitzenlänge, Spitzendurchmesser |
| Fk | Federkonstante |
| do | Bolzenabstand |
| C | Kapazität des Schweisskondensators |
| L | Induktivität der Zuleitung |
| R | Widerstand im Schweissstromkreis |

| Betriebsparameter | |
|---|---|
| Ko | Anfangskraft der Feder |
| Uo | Ladespannung des Schweisskondensators |
| Cv | Kapazitätsvorwahlstufe |

| Schweisssignale | |
|---|---|
| U(t) | zeitlicher Verlauf der Schweissspannung |
| J(t) | zeitlicher Verlauf des Schweissstromes |
| d(t) | zeitlicher Verlauf des Bolzenweges |
| Lp(t) | zeitlicher Verlauf des Schalldruckes |

| charakteristische Grössen | |
|---|---|
| t0, t1,... | charakteristische Zeitpunkte |
| t0 | Spitzenkontaktzeitpunkt |
| t1 | Spitzenexplosionszeitpunkt |
| t2 | Bolzenkurzschlusszeitpunkt |
| tm | Zeitpunkt des Strommaximums |
| Jtx | Strom zum Zeitpunkt X |
| Utx | Schweissspannung zum Zeitpunkt X |
| UB | Bogenbrennspannung |
| Lpn | Schalldruckintegral im niederen Frequenzbereich |
| Lph | Schalldruckintegral im oberen Frequenzbereich |

Ist-Kennwerte
 Obz1, Sa1, Fk1, d1, C1, L1, R1

Grenzwerte
 Grenzwerte der Grössen mit Kennzei-
xxg chen xx
– AS1, AS2 Alarmsignale

Betriebsparameter
 Ko1, Uo1, Cv1 Betriebsparameter neu
 mit Index 1

Fig. 12


**Patentansprüche**

1. Bolzenschweissverfahren mit Spitzenzündung zwischen einem Bolzen (5) und einem Werkstück mit einem Schweisskopf mit einer Andruckvorrichtung (61) mit einer auf eine Anfangsfederkraft (Ko) voreinstellbaren Feder (62) zum Andrükken des Bolzens (5) mit seiner Spitze (52) aus einem voreinstellbaren Abstand (do) auf eine Oberfläche (53) des Werkstückes und mit einem Schweisskabel (31), welches den Bolzen (5) über Schaltmittel (TH1) entsprechend einer einstellba-. ren Kapazitätsvorwahl (Cv, Mu1) mit einer Schweisskondensatorenanordnung (C1, C2, C3) verbindet, die andererseits mit dem Werkstück zu verbinden ist und die mit einer einstellbaren Ladevorrichtung (Tr) auf die Anfangsschweissspannung (Uo) ladbar ist, dadurch gekennzeichnet, dass der Schweisskopf Messmittel (RMi; 70) zur Aufnahme des zeitlichen Verlaufes von Schweisssignalen, nämlich von Schweissstrom (I(t)) Schweissspannung (U(t)) und Bolzenschaftweg (d), besitzt, deren Signale an einen Messwertanalysator in einer Steuervorrichtung (MP) geführt werden, der daraus folgende charakteristischen Grössen (Mw),
einen Spitzenkontakt Zeitpunkt $t_0$,
einen Spitzenexplosionszeitpunkt $t_1$,
einen Bolzenkurzschlusszeitpunkt $t_2$,
einen Zeitpunkt des Strommaximums $t_m$,
einer Bolzenschmelzeindringtiefe $d_3$,
einen Bolzenschaftrückprallweg $d_4$ und
einer Kontinuität des Stromverlaufes,
ableitet und der Steuervorrichtung (MP) zuführt, die diese charakteristischen Grössen oder Kombinationen davon mit zuvor eingegebenen Richtwerten oder mit bei einer vorhergehenden Schweissung abgeleiteten Werten für diese charakteristischen Grössen (Mw) oder Kombinationen ($t_2-t_1$; $t_1-t_0$; $d_3+d_4$) davon vergleicht und aus diesem Vergleich über zuvor durch Versuchsreihen, Analysen und mathematische Auswertung ermittelte tendenzielle Zuordnungen zwischen jeweils einer charakteristischen Grösse (Mw) oder einer der Kombinationen und jeweils einer Stellgrösse (BP; Ko, Cv, Uo) und dem darin enthaltenen gemessenen Punkt des optimalen Schweisserfolges eine Veränderung der zu dem Messzeitpunkt bestehenden Stellgrössen (BP) für die Anfangsfederkraft (Ko), die Kapazität (C1, C2, C3) und der Anfangsschweissspannung (Uo) errechnet und für die folgende Schweissung an die entsprechenden Stellglieder für die Federverstellung (67), Kapazitätsvorwahl (Mu1) und Ladevorrichtungen (Tr) mittelbar oder unmittelbar weitergibt.

2. Verfahren nach Anspruch 1, dadurch gekennzeichnet, dass die charakteristischen Grössen (Mw; $t_0$, $t_1$, $t_2$, $t_m$; $d_3$, $d_4$) und Kennwerte (Kw), wie ein Oberflächenzustand (Obz1), eine Spitzenabmessung (Sa) und eine Federkonstante (Fk), einer Anzahl (n) bzw. (m) Schweissvorgänge zugeordnet zu einer Charge Bolzen, einer Charge Werkstücke und/oder einer Positionsnummer jeweils gemeinsam ausgewertet werden und daraus jeweils ein Mittelwert (Mwm, Kwm) und eine Streuung (MwStr, KwStr) der Grössen (Mw) bzw. Kennwerte (Kw) ermittelt wird und die Mittelwerte (Mwm, Kwm) zur weiteren Verarbeitung als Ist-Werte benutzt werden und aus den Mittelwerten (Kwm, Mwm) und den Streuungen (MwStr, KwStr) neue Grenzwerte (M'wgu, M'wgo; K'wgu, K'wgo) bestimmt werden, wobei vorzugsweise der Abstand der unteren Grenzwerte (M'wgu, K'wgu) von den oberen Grenzwerten (M'wgo, K'wgo) grösser als die jeweiligen Streuungen (MwStr, KwStr) sind.

3. Verfahren nach Anspruch 1 oder 2, dadurch gekennzeichnet, dass die Grössen (Mw), die Kennwerte (Kw) und die Stellgrössen (BP) mit vorgegebenen Grenzwerten (Mwgu, Mwgo; Kwgu, Kwgo; Bpgu, Bpgo) verglichen werden und bei Überschreitung der Grenzen durch die jeweils zugehörige charakteristische Grösse (Mw) bzw. den Kennwert (Kw) bzw. eine der Stellgrössen (BP) ein zugehöriges Alarmsignal (AS, AS1, AS2) erzeugt und angezeigt wird.

4. Verfahren nach einem der vorhergehenden Ansprüche, dadurch gekennzeichnet, dass die charakteristischen Grössen (Mw) die Kennwerte (Kw) und die Stellwerte (BP) mit festen oder vorzugsweise variablen Grenzwerten (M'wgu, M'wgo; K'wgu, K'wgo; Bp'wgu, B'wgo) verglichen werden und bei Überschreitung eines der Grenzwerte jeweils der entsprechende Grenzwert statt der geprüften Grösse (Mw, Kw, BP) für die weitere Verarbeitung als Ist-Wert benutzt wird oder zur Bildung der Mittelwerte (Mwm, Kwm) und Streuungen (Mwstr, Kwstr) benutzt wird.

5. Verfahren nach einem der vorhergehenden Ansprüche, dadurch gekennzeichnet, dass vor dem Schweissvorgang mindestens einer der Kennwerte (C1, C2, C3; L, R, do) gemessen wird und vorzugsweise durch mindestens einen Prüfbewegungsvorgang ohne Schweissspannung (Uo) eine Auftreffgeschwindigkeit (vt0-ist) gemessen bzw. aus Kennwerten (ta, t0) bestimmt wird, und aus dieser eine Anfangskraft (Ko) bestimmt wird.

6. Verfahren nach einem der vorhergehenden Ansprüche, dadurch gekennzeichnet, dass aus dem zeitlichen Verlauf eines der Schweisssignale (I(t)) die Grössen (t2, t1) vom Spitzenexplosionszeitpunkt (t1) und Bolzenkurzschlusszeitpunkt (t2) bestimmt werden und daraus die Bogenbrennzeit (t2–t1) errechnet wird und aus dieser die Spitzenlänge (S1) bestimmt wird, und aus dieser die Auftreffgeschwindigkeit (vt0-soll) und daraus die Anfangskraft (Ko) bestimmt wird.

7. Verfahren nach einem der vorhergehenden Ansprüche, dadurch gekennzeichnet, dass aus einem der Schweisssignale (I(t)) die Grössen (t0, t1) der Spitzenexplosionszeitpunkt (t1) bestimmt wird und daraus die Spitzenschmelzzeit (t1–t0) berechnet wird und daraus ein Spitzendurchmesser (Sd) bestimmt wird und aus diesem und der Induktivität (L) die Mindestgrösse der Ladespannung (Uo) bestimmt wird.

8. Verfahren nach Anspruch 7, dadurch gekennzeichnet, dass die Kapazitätswahl (Cv) so aus der Induktivität (L) bestimmt wird, dass der Zeitpunkt (tm) des Strommaximums (Itm) in der Bogenbrennzeit (t2–t1) liegt und vorzugsweise in der ersten Hälfte dieser liegt.

9. Verfahren nach Anspruch 8, dadurch gekennzeichnet, dass aus der Induktivität (L) und dem Widerstand (R) im Schweissstromkreis eine Mindestgrösse für die Ladespannung (Uo) so bestimmt wird, dass zum Bolzenkurzschlusszeitpunkt (t2) ein Strom (It2) fliesst, der vorzugsweise etwa 20% des Maximalstromes (Itm) beträgt.

10. Verfahren nach Anspruch 9, dadurch gekennzeichnet, dass die Ladespannung (Uo) unter Berücksichtigung einer getrennt bestimmten Ladespannung (Uo(C1)) einer Teilkapazität (C1) und einer weiteren Teilkapazität (C2, C3) je nach Kapazitätsvorwahl (Cv) ermittelt wird.

11. Verfahren nach einem der vorhergehenden Ansprüche, dadurch gekennzeichnet, dass abhängig von der Bogenbrennspannung (Utm), dem zugehörigen Strom (Jtm) und dem zugehörigen Abstand (dtm) ein Kennwert über den Oberflächenzustand (Obz-ist) bestimmt wird oder, dass aus dem Verlauf eines Schalldrucksignals (Lp(t)) bezüglich einer Grenzfrequenz von ca. 1 kHz im niedrigeren Frequenzbereich ein Schalldruckintegral (Lpn) und im höheren Frequenzbereich ein weiteres Schalldruckintegral (Lph) gebildet wird, und aus dem Verhältnis der Schalldruckintegrale (Lpn, Lph) und diesen Integralen selbst ein Kennwert über den Oberflächenzustand (Obz-ist) bestimmt wird und aus der Eindringtiefe des Bolzens (d3) und der Rückprallamplitude (d4) ein Kennwert für das Oberflächenmaterial (Obm-ist) bestimmt wird und aus dem Oberflächenmaterialkennwert (Obm-ist) und den Oberflächenzustandskennwerten (Obz-ist) eine Lichtbogenenergie (Eb-soll) bestimmt wird und diese in die Bestimmung der Ladespannung (Uo, Uo(C2, C3) und die Kapazitätsvorwahl (Cv) einbezogen wird.

12. Verfahren nach einem der vorhergehenden Ansprüche, dadurch gekennzeichnet, dass mindestens ein Schweisssignal (U(t), J(t)) in einem Zeitraster mit einem Rasterabstand, der etwa einem Prozent der Schweisszeit entspricht, gemessen und als Folge gespeichert wird und nach der Schweissung auf die gespeicherte Folge ein Filteralgorithmus angewendet wird, der sporadische, kurzzeitige Störsignale ausfiltert, und anschliessend auf die gefilterte Folge ein Analysealgoithmus angewendet wird, der Unstetigkeiten und Extremwerte und den Zeitpunkt ihres Auftretens in der Folge als die charakteristische Grössen (t1, t2, tm) bestimmt und die zugehörigen Messwerte (Jt1, Jt2, Jtm, Ut1, Ut2) ausgibt.

13. Verfahren nach einem der vorhergehenden Ansprüche, dadurch gekennzeichnet, dass zu vorgegebenen Zeitpunkten (t0, t1-soll, t2-soll, tm-soll) oder zu aus mindestens einem Schweisssignal (J(t)) ermittelten charakteristischen Zeitpunkten (t1-ist, t2-ist, tm-ist) die jeweilige zeitliche Grösse von den Schweisssignalen gemessen und abgespeichert wird.

14. Verfahren nach einem der vorhergehenden Ansprüche, dadurch gekennzeichnet, dass zu Beginn der Durchführung einer Schweissung der elektrische Widerstand von Stützfüssen (41, 42, 43) des Schweisskopfes zur Oberfläche (53) des Werkstückes gemessen wird und die Messwerte untereinander und mit vorgegebenen Grenzwerten verglichen werden und bei Überschreiten eines Grenzwertes ein Alarmsignal ausgegeben wird, das vorzugsweise eine erneute Positionierung auslöst.

15. Verfahren nach einem der vorhergehenden Ansprüche, dadurch gekennzeichnet, dass zu Beginn vor Durchführung einer Schweissung die Lage des Schweisskopfes gemessen wird oder von einer Positioniervorrichtung übernommen wird und das Lagesignal in die Bestimmung der Anfangskraft (Ko) eingeführt wird.

16. Verfahren nach Anspruch 1, dadurch gekennzeichnet, dass die Stellglieder (67, Tr, Mu1) elektrisch steuerbar sind und ihre Steuereingänge mit den entsprechenden Ausgängen der Steuervorrichtung (MP) zur Zuführung der Stellgrössen (Ko, Cv, Uo) verbunden sind und dass die Steuervorrichtung (MP) eingangsseitig mit einer Eingabevorrichtung (Ta) zur Zuführung der Kennwerte (Ku; Obz1, Sa, Fk) verbunden ist.

17. Verfahren nach Anspruch 16, dadurch gekennzeichnet, dass das Stellglied (67) für die Anfangsfederkraft ein Motor ist, der eine Feder (62), die in einer Hülse (63) gelagert ist, durch Verdrehen einer mit einem Gewinde auf die Hülse (63) angesetzte Gewindehülse (64) spannt, und dass vorzugsweise die Hülse (63) mit einem Schleifer (71) eines Potentiometers (70) verbunden ist, an dem an einem Anschluss (37a) ein zugehöriges Positionssignal abnehmbar ist.

18. Verfahren nach Anspruch 16 oder 17, dadurch gekennzeichnet, dass der Schweisskopf mindestens einen Stützfuss (42) besitzt, mit dem er in der Nähe der Schweissstelle (54) auf der Oberfläche (53) elektrischen Kontakt bildet und der Stützfuss (42) und der Anschluss (47) des Schweisskabels (31) zum Bolzen (5) an ein abgeschirmtes Spannungsmesskabel (32, 32a) angeschlossen sind, an dessen anderem Ende (32', 32'a) die Schweissspannung messbar ist.

19. Verfahren nach Anspruch 18, dadurch gekennzeichnet, dass der Schweisskopf drei Stützfüsse (41, 42, 43) besitzt, die mit ihren Stützflächen auf der Oberfläche (53) in dem Abstand (do) vor der ruhenden Spitze (54) enden; und die isoliert zum Schweisskopf gelagert sind und einzeln mit Adern eines Messkabels (32a, 32b, 32c), das vorzugsweise eine Abschirmung (32) besitzt, verbunden sind.

20. Verfahren nach einem der Ansprüche 16 bis 19, dadurch gekennzeichnet, dass einerseits mit dem Bolzen (5) vorzugsweise über den Schaft (61) des Andruckmechanismus und andererseits mit dem über die Stützfüsse (41, 42, 43) abgestützten Gehäuse (1) des Schweisskopfes ein vorzugsweise induktiv oder elektrooptisch arbeitender Weggeber angeordnet ist, der mit einem Anschluss (40, 40a) verbunden ist, an dem statisch oder dynamisch das Bolzenwegsignal (d(t)) abnehmbar ist.

21. Verfahren nach Anspruch 16, dadurch gekennzeichnet, dass am Schweisskopf ein Mikrofon (74) und/oder ein elektronischer Lichtaufnehmer angeordnet ist, die mit Kabeln (35, 35a, 35b) verbunden sind, an denen Schweisssignale (Lp(t), Li(t)) abnehmbar sind.

22. Verfahren nach Anspruch 16, dadurch gekennzeichnet, dass die Steuervorrichtung (MP) aus einem Mikroprozessor besteht, der mit einem Analog-Digitalwandler (ADU) verbunden ist, dessen Eingang mit den Messmitteln (70, 74, 32/40) steuerbar verbunden ist, und dass die Steuervorrichtung (MP) mit dem Zündeingang des Schaltmittels (TH1), das ein Thyristor ist, verbunden ist.

23. Verfahren nach Anspruch 22, dadurch gekennzeichnet, dass der Analog-Digitalwandler (ADU) eingangsseitig über einen Messmultiplexer (Mu2), der vom Mikroprozessor (MP) gesteuert wird, mit den Messsignal führenden Kabeln (32', 32'a; 38, 38a; 39, 39a; 40, 40a; 37, 37a; 35, 35a, b) verbunden ist und eines der Kabel (39, 39a) mit dem Schweisskondensator (C1, C2, C3) und eines der Kabel (38, 38a) mit den Enden eines Messwiderstandes (RM), der in den Schweissstromkreis vor dem Schweisskabel eingefügt ist, verbunden ist.

24. Verfahren nach Anspruch 22 oder 23, dadurch gekennzeichnet, dass der Mikroprozessor (MP) ausgangsseitig mit einer Ladeschaltung (NT, Rv, Tr) verbunden ist und dieser ein Steuersignal (Ts) zuführt und durch dessen Dauer die Aufladung des Kondensators (C1, 2, 3) auf die vorgegebene Ladespannung (Uo) steuert oder mittels Messung der Ladespannung (Uo') regelt.

25. Verfahren nach Anspruch 22 oder 23, dadurch gekennzeichnet, dass der Mikroprozessor (MP) ausgangsseitig mit dem Motor (67) verbunden ist und diesen nach Richtung und Dauer in vorgegebener Weise beaufschlagt, und zwar vorzugsweise so, dass das Signal am Potentiometerschleifer (37a) vom Potentiometer (70), das durch eine Spannung (Up) zwischen seinen Enden (37, 37b) gespeist wird, einen vorbestimmten Wert hat.

26. Verfahren nach einem der Ansprüche 22 bis 24, dadurch gekennzeichnet, dass der Schweisskondensator (C1, 2, 3) aus mehreren Teilkondensatoren (C1, C2, C3) besteht, die jeweils an ihrem einen Anschluss miteinander verbunden sind und an ihrem zweiten Anschluss fortlaufend mit Dioden (D2, D3) untereinander verbunden sind und mit dem zweiten Anschluss fortlaufend an einen Umschalter, vorzugsweise einen Multiplexer (Mu1), der abhängig von dessen Stellung bzw. der zugeführten Kapazitätsvorwahl (Cv) die Ladeschaltung (NT, Rv, Ts) mit den jeweilig angesteuerten Kondensatoren (C1, C2, C3) verbindet, angeschlossen sind und dass vorzugsweise die Kapazitätsvorwahl (Cv) mit einem Ausgang des Mikroprozessors (Mp) verbunden ist.

27. Verfahren nach Anspruch 22 oder 23, dadurch gekennzeichnet, dass mindestens eine Ader des Messkabels (32a, b, c) an einen Thyristor (TH2, 3, 4), der an seiner Steuerelektrode mit dem Mikroprozessor (MP) verbunden ist und von diesem mit einem Zündsignal (Tz2, 3, 4) gezündet werden kann und eingangsseitig vorzugsweise mit dem Schweisskondensator (C1, 2, 3) verbunden ist, angeschlossen ist und dass das Messkabel (32a, b, c; 32) zur induktiven engen Kopplung eng benachbart zum Schweisskabel (31) geführt ist.

28. Verfahren nach Anspruch 22, dadurch gekennzeichnet, dass der Mikroprozessor (MP) eingangsseitig mit einem Taktgenerator (CI) und Eingabegeräten (Ta, PoS) und ggf. einer Dateneingabeleitung (Dt) verbunden ist und ausgabeseitig mit Ausgabegeräten (Dp, Pr, AM1, 2) und ggf. einer Datenübertragungsleitung (Dü) verbunden ist.

29. Verfahren nach Anspruch 22, dadurch gekennzeichnet, dass mindestens eines der Schweisssignale (U(t), J(t), d(t), Lp(t), Li(t)) einem Triggernetzwerk (TNW1, 2) zugeführt wird, das jeweils einen Ausgangsimpuls (Tt0, Tt1 . . .) liefert, wenn das Schweisssignal eine Unstetigkeit und/oder einen Extremwert durchläuft, und ggf. mehrere dieser Triggersignale über ein Oder-Gatter (OG3) zusammengeschaltet werden, dessen Ausgangssignal (St) einem Interrupteingang des Mikroprozessors (Mp) zugeführt wird.

30. Verfahren nach Anspruch 29, dadurch gekennzeichnet, dass das Triggernetzwerk (TNW1) aus einem Vergleicher (K1) mit einer Hysterese, die klein gegenüber den Unstetigkeiten ist, besteht, dessen einem Eingang das Schweisssignal (J(t)) über einen Widerstand (Rk1), dem eine Begrenzerschaltung (DK1, DK2) parallel geschaltet ist, und dessen invertierendem zweiten Eingang das Schweisssignal (J(t)) über eine Begrenzerschaltung (DK3, DK4) und eine Speicherschaltung, einen Kondensator (CK1) zugeführt ist, und dessen gleichsinniger und invertrierter Ausgang jeweils auf einen Impulsgenerator (P1, P2) geführt ist und deren ggf. mehrere Ausgänge über ein Oder-Gatter (OG1) zusammengeführt sind.

31. Verfahren nach Anspruch 22, dadurch gekennzeichnet, dass das Schalldrucksignal (Lp(t)) parallel einer Tiefpassschaltung (Tp) und einer Hochpassschaltung (Hp) mit jeweils nachgeschaltetem Integrator (JG1, JG2) zugeführt wird und die Integratoren durch Steuerschaltungen (Tr1, Tr2) vor einer Schweissung entladen bzw. normiert werden und während der Schweissung freigegeben werden, wobei das Steuersignal hierfür vom Mikroprozessor (Mp) oder einem dem Triggernetzwerk (TNW1) nachgeschalteten Flipflop (FF) den Steuerschaltungen (Tr1, Tr2) zugeführt wird, und dass die Ausgänge der Integratoren mit Eingängen des Messmultiplexers (Mu2) verbunden sind.

**Claims**

1. A stud welding process comprising tip initiation between a stud (5) and a workpiece with a welding head with a pressure device (61) with a spring (62) presettable to an initial spring force (Ko) for pressing the tip (52) of the stud (5) from a presettable distance (do) onto a workpiece surface (53) and with a welding cable (31), which connects the stud (5) to a welding capacitor arrangement (C1, C2, C3) via switching means (TH1) corresponding to an adjustable preselected capacitance (Cv, Mu1), which welding capacitor arrangement (C1, C2, C3) is to be connected on the other side with the workpiece and which is chargeable by means of an adjustable chargeing device (Tr) to the initial welding-arc voltage (Uo), characterized in that the welding head comprises measuring means (RMi, 70) for recording the time behaviour of welding signals, that is of the welding current (I(t)), the welding arc voltage (U(t)) and the stud shaft path (d), the signals from which measuring means are conveyed to a measured value analyzer in a control device (MP), which derives the following characteristic values (Mw) therefrom,
a tip contact time $t_0$,
a tip explosion time $t_1$,
a stud short-circuit time $t_2$,
a maximum current time $t_m$,
a stud melting penetration depth $d_3$,
a stud shaft rebound path $d_4$ and
continuity of current behaviour,
and supplies the characteristic values to the control device (MP), which compares these characteristic values or combinations thereof with previously input recommended values or with values derived during previous welding for these characteristic values (Mw) or combinations ($t_2$–$t_1$; $t_1$–$t_0$; $d_3$+$d_4$) thereof and calculates from this comparison via tendential allocations, determined previously by series of tests, analyses and mathematical evaluation, between a characteristic value (Mw) or one of the combinations and a correcting variable (BP; Ko, Cv, Uo) and the measured point contained therein of the optimum welding result an alteration of the correcting variables (BP) in existence at the time of measurement for the initial spring force (Ko), the capacitance (C1, C2, C3) and the initial welding arc voltage (Uo), which it transmits directly or indirectly for the subsequent welding to the corresponding correction devices for spring adjustment (67), capacitance preselection (Mu1) and charging devices (Tr).

2. A process according to claim 1, characterized in that the characteristic values (Mw; t0, t1, t2, tm; d3, d4) and characteristic parameters (Kw), such as surface condition (Obz1), tip dimensions (Sa) and a spring constant (Fk), of a number (n) or (m) of welding processes allocated to a charge of bolts, a charge of workpieces and/or a number of positions are evaluated together and an average value (Mwm, Kwm) and deviation (MwStr, KwStr) of the values (Mw) or parameters (Kw) is determined therefrom, the average values (Mwm, Kwm) being used for further processing as actual values and new limit values (M'wgu, M'wgo; K'wgu, K'wgo) being determined from the average values (Kwm, Mwm) and the deviations (MwStr, KwStr), the separation of the lower limit values (M'wgu, K'wgu) from the upper limit values (M'wgo, K'wgo) preferably being greater than the respective deviations (MwStr, KwStr).

3. A process according to claim 1 or claim 2, characterized in that the values (Mw), the parameters (Kw) and the correcting variables (BP) are compared with predetermined limit values (Mwgu, Mwgo; Kwgu, Kwgo; Bpgu, Bpgo) and when the limits are exceeded by the appropriate characteristic value (Mw) or parameter (Kw) or one of the correcting variables (BP) an appropriate alarm signal (AS1, AS2) is generated and indicated.

4. A process according to any one of the preceding claims, characterized in that the characteristic values (Mw), the parameters (Kw) and the correcting variables (BP) are compared with fixed or preferably variable limit values (M'wgu, M'wgo; K'wgu, K'wgo; Bp'wgu, Bp'wgo) and when one of the limit values is exceeded the corresponding limit value is used as the actual value for further processing instead of the tested value (Mw, Kw, BP) or for generation of the average values (Mwm, Kwm) and deviations (Mwstr, Kwstr).

5. A process according to any one of the preceding claims, characterized in that before the welding process at least one of the parameters (C1, C2, C3; L, R, do) is measured and an impact velocity (vto-ist) is measured or determined from parameters (ta, t0) by at least one test movement operation without welding-arc voltage (Uo), and from this an initial force (Ko) is determined.

6. A process according to any one of the preceding claims, characterized in that from the time behaviour of one of the welding signals (I(t)) the values (t2, t1) of the tip explosion time (t1) and the stud short-circuit time (t2) are determined, the arc combustion period (t2–t1) being calculated therefrom and the tip length (S1) being determined from this, and the impact velocity (vt0-soll) and therefrom the initial force (Ko) being determined from this.

7. A process according to any one of the preceding claims, characterized in that the values (t0, t1) of the tip explosion time (t1) is determined from one of the welding signals (I(t)) and the tip melting time (t1–t0) is calculated therefrom and a tip diameter (Sd) is determined thereform and from this and the inductance (L) the minimum value of the charging voltage (Uo) is determined.

8. A process according to claim 7, characterized in that the selected capacitance (Cv) is so determined from the inductance (L) that the time (tm) of the current maximum (Itm) lies within the arc combustion period (t2–t1) and preferably within the first half thereof.

9. A process according to claim 8, characterized in that from the inductance (L) and the resistance (R) in the welding current circuit a minimum value is so determined for the charging voltage (Uo) that at the stud short-circuit time (t2) a current (It2) flows which preferably amounts to approximately 20% of the maximum current (Itm).

10. A process according to claim 9, characterized in that the charging voltage (Uo) is determined taking into account a separately determined charging voltage (UoC1), a partial capacitance (C1) and another partial capacitance (C2, C3) according to the preselected capacitance (Cv).

11. A process according to any one of the preceding claims, characterized in that a characteristic parameter is determined in dependence on the arc combustion voltage (Utm), the appropriate current (Jtm) and the appropriate separation (dtm) for the surface condition (Obz-ist) or in that from the behaviour of a sound pressure signal (Lp(t)) relating to a limit frequency of ca. 1kHz a sound pressure integral (Lpn) is generated in the lower frequency range and another sound pressure integral (Lph) is generated in the higher frequency range, and from the relationship of the sound pressure integrals (Lpn, Lph) and from these integrals themselves a parameter is determined for the surface condition (Obz-ist) and from the penetration depth of the stud (d3) and the rebound amplitude (d4) a parameter is determined for the surface material (Obm-ist) and from the surface material parameter (Obm-ist) and the surface condition parameters (Obz-ist) an arc energy (Eb-soll) is determined and this is included in the determination of the loading voltage (Uo, Uo (C2, C3)) and the preselected capacitance (Cv).

12. A process according to any one of the preceding claims, characterized in that at least one welding signal (U(t), J(t)) is measured in a time grid with a grid element spacing which corresponds to approximately one percent of the welding time and stored as a sequence and after welding a filter algorithm is applied to the stored sequence, which filter algorithm filters out sporadic, short-time disturbance signals, and then an analysis algorithm is applied to the filtered sequence, which determines the discontinuities and extreme values and the time of their occurrence in the sequence as the characteristic values (t1, t2, tm) and outputs the appropriate measured values (Jt1, Jt2, Jtm, Ut1, Ut2).

13. A process according to any one of the preceding claims, characterized in that at predetermined times (t0, t1-soll, t2-soll, tm-soll) or at characteristic times (t1-ist, t2-ist, tm-ist) determined from at least one welding signal (J(t)) the respective time values of the welding signals are measured and stored away.

14. A process according to any one of the preceding claims, characterized in that at the beginning of the welding process the electrical resistance between welding head supporting feet (41, 42, 43) and the surface (53) of the workpiece is measured and the measured values are compared with each other and with predetermined limit values and if a limit value is exceeded an alarm signal is output, which preferably initiates renewed positioning.

15. A process according to any one of the preceding claims, characterized in that at the beginning of a welding process the position of the welding head is measured or received by a positioning device and the position signal is introduced into the determination of the initial force (Ko).

16. A process according to claim 1, characterized in that the adjusting members (67, Tr, Mu1) are electrically controllable and in that their control inputs are connected to the corresponding outputs of the control device (MP) for supplying the correcting variables (Ko, Cv, Uo) and in that the control device (MP) is connected on the input side to an input device (Ta) for supplying the characteristic parameters (Ku; Obz1, Sa, Fk).

17. A process according to claim 16, characterized in that the adjusting member (67) for the initial spring force is a motor, which loads a spring (62), which is mounted in a sleeve (63), by twisting of a tapped sleeve (64) attached with a thread to the sleeve (63), and in that the sleeve (63) is preferably connected with the wiper (71) of a potentiometer (70), at which an appropriate position signal can be picked up at a terminal (37a).

18. A process according to claim 16 or claim 17, characterized in that the welding head comprises at least one supporting foot (42), with which it forms electrical contact in the region of the welding place (54) on the surface (53) and in that the supporting foot (42) and the terminal (47) of the welding cable (31) with the stud (5) are connected to a screened voltage measuring cable (32, 32a), at whose other end (32', 32'a) the welding arc voltage can be measured.

19. A process according to claim 18, characterized in that the welding head comprises three supporting feet (41, 42, 43), which end with their support surfaces on the surface (53) at a distance (do) in front of the stationary point (54) and which are mounted isolated from the welding head and are individually connected with cores of a measuring cable (32a, 32b, 32c), which preferably comprises screening (32).

20. A process according to any one of claims 16 to 19, characterized in that a preferably inductively or electrooptically operating displacement pick-up is arranged on the one side with the stud (5) preferably via the shaft (61) of the pressure mechanism and on the other side with the welding head housing (1) supported by the supporting feet (41, 42, 43) and is connected with a terminal (40, 40a), at which the stud displacement signal (d(t)) can be picked up statically or dynamically.

21. A process according to claim 16, characterized in that a microphone (74) and/or an electronic light receiver is arranged on the welding head and is connected with cables (35, 35a, 35b) at which welding signals (Lp(t), Li(t)) can be picked up.

22. A process according to claim 16, characterized in that the control device (MP) consists of a microprocessor, which is connected with an analogue-digital converter (ADU), whose input is connected controllably to the measuring means (70, 74, 32/40), and in that the control device (MP) is connected with the initiation input of the switching means (TH1), which is a thyristor.

23. A process according to claim 22, characterized in that the analogue-digital converter (ADU) is connected on the input side via a measuring multiplexer (Mu2), which is controlled by the microprocessor (MP), with the cables (32′, 32′a; 38, 38a; 39, 39a; 40, 40a; 37, 37a; 35, 35a, b) carrying measuring signals and in that one of the cables (39, 39a) is connected with the welding capacitor (C1, C2, C3) and one of the cables (38, 38a) is connected with the ends of a measuring resistor (RM), which is inserted into the welding current circuit before the welding cable.

24. A process according to claim 22 or claim 23, characterized in that the microprocessor (MP) is connected on the output side with a charging circuit (NT, Rv, Tr) and feeds a control signal (Ts) thereto and by the duration thereof controls charging of the capacitor (C1, 2, 3) to the predetermined charging voltage (Uo) or regulates it by measuring the charging voltage (Uo′).

25. A process according to claim 22 or claim 23, characterized in that the microprocessor (MP) is connected on the output side with the motor (67) and acts upon this according to direction and duration in the predetermined way, preferably in such a way that the signal at the potentiometer wiper (37a) of the potentiometer (70), which is fed by a voltage (Up) between its ends (37, 37b), has a predetermined value.

26. A process according to any one of claims 22 to 24, characterized in that the welding capacitor (C1, 2, 3) comprises several partial capacitors (C1, C2, C3), which are each connected together at their one terminal and are series connected at their second terminal with diodes (D2, D3) and are series connected by the second terminal to a double-throw switch, preferably a multiplexer (Mu1), which, dependent on its position or the preselected capacitance (Cv) supplied, connects the charging circuit (NT, Rv, Ts) with the respectively charged capacitors (C1, C2, C3), and in that the preselected capacitance (Cv) is preferably connected with an output of the microprocessor (Mp).

27. A process according to claim 22, or claim 23, characterized in that at least one core of the measuring cable (32a, 32b, 32c) is connected to a thyristor (TH2, 3, 4), which is connected at its control electrode with the microprocessor and can be initiated therefrom with an initiation signal (Tz2, 3, 4) and on the input side is preferably connected with the welding capacitor (C1, 2, 3), and in that the measuring cable (32a, b, c; 32) is supplied to the close inductive coupling closely adjacent the welding cable (31).

28. A process according to claim 22, characterized in that the microprocessor (MP) is connected on the input side with a clock pulsegenerator (Cl) and input devices (Ta, PoS) and optionally a data input line (Dt) and on the output side with output devices (Dp, Pr, AM1, 2) and optionally a data transmission line (Dü).

29. A process according to claim 22, characterized in that at least one of the welding signals (U(t), J(t), d(t), Lp(t), Li(t)) is fed to a trigger network (TNW1, 2), which delivers an output pulse (Tt0, Tt1) ...) when the welding signal goes through a discontinuity and/or an extreme value, and optionally several of these trigger signals are interconnected via an OR-gate (OG3), whose output signal (St) is fed to an interrupt input of the microprocessor (Mp).

30. A process according to claim 29, characterized in that the trigger network (TNW1) consists of a comparator (K1) with hysteresis, which is small in relation to the discontinuities, to one of the inputs of which comparator (K1) the welding signal (J(t)) is fed via a resistor (Rk1), in parallel with which a limiting circuit (DK1, DK2) is connected, and to the second, inverting input of which comparator the welding signal (J(t)) is fed via a limiting circuit (DK3, DK4) and a memory circuit and a capacitor (CK1), and the unidirectional and inverted output of which comparator is fed to a pulse generator (P1, P2) and the optionally several outputs of which comparator are brought together via an OR-gate (OG1).

31. A process according to claim 22, characterized in that the sound pressure signal (Lp(t)) is supplied in parallel to a low-pass circuit (Tp) and a high-pass circuit (Hp) each with an integrator (JG1, JG2) connected downstream and in that the integrators are discharged or normalized by control circuits (Tr1, Tr2) before welding and released during welding, the control signal herefor being supplied by the microprocessor (Mp) or a flipflop (FF) connected downstream of the trigger network (TNW1) to the control circuits (Tr1, Tr2), and in that the outputs of the integrators are connected with inputs of the measuring multiplexer (Mu2).

## Revendications

1. Procédé de soudage de goujons avec amorçage en bout entre un goujon (5) et une pièce à usiner, à l'aide d'une tête de soudage avec un dispositif de pression (61), avec un ressort (62) préréglable à une force élastique initiale (Ko), pour presser le goujon (5) avec sa pointe (52) à partir d'un intervalle préréglé (do) sur une surface (53) de la pièce à usiner, et avec un câble de soudage (31) reliant le goujon (5), par l'intermédiaire de dispositifs de commutation (TH1), conformément à une présélection de capacité réglable (Cv, Mu1), à un dispositif de soudage à condensateur (C1, C2, C3), lequel, d'autre part, est à relier à la pièce à usiner, et est chargeable avec un chargeur (Tr) à la tension de soudure initiale (Uo), caractérisé par le fait que la tête de soudage est équipée de dispositifs de mesure (RMi; 70) détectant le cours chronologique de signaux de soudage, notamment courant de soudage (I(t)), tension de soudure (U(t)) et chemin de la tige du goujon (d), dont les signaux sont conduits à un analyseur de valeurs mesurées, dans un dispositif de commande (MP), lequel analyseur en déduit les grandeurs caractéristiques (Mw) suivantes:

un point de contact de pointe $t_0$,
un point d'explosion de pointe $t_1$,
un point de court-circuit goujon $t_2$,
un point du maximum de courant $t_m$,
une profondeur de pénétration fusion goujon $d_3$,
un chemin de rebondissement de la tige du goujon $d_4$, et
une continuité du trajet du courant
et les conduit au dispositif de commande (MP) qui compare ces grandeurs caractéristiques ou leurs combinaisons avec des valeurs indicatives, introduites préalablement, ou avec des données déduites d'un soudage précédent pour ces grandeurs caractéristiques (Mw) ou combinaisons ($t_2$–$t_1$; $t_1$–$t_0$; $d_3$ + d4) et – sur la base de cette comparaison, par l'intermédiaire de relations tendencielles, établies préalablement dans le cadre de séries d'essais, analyses et exploitations mathématiques, entre une grandeur caractéristique (Mw) ou l'une des combinaisons et une valeur réglante respective (BP; Ko, Cv, Uo), ainsi que le point mesuré compris du succès optimal de soudage – calcule une modification des valeurs réglantes (BP) existantes au moment du mesurage pour la force élastique initiale (Ko), la capacité (C1, C2, C3), ainsi que la tension de soudure initiale (Uo) et en assure la transmission, directe ou indirecte, aux organes de réglage pour le réglage du ressort (67), la présélection de capacité (Mu1) et chargeurs (Tr).

2. Procédé selon la spécification 1, caractérisé par le fait que les grandeurs caractéristiques (Mw; $t_0$, $t_1$, $t_2$, $t_m$; $d_3$, $d_4$) et les valeurs (Kw), comme un état de surface (Obz1), une dimension de pointe (Sa) et une constante d'élasticité (Fk), adjointes à un nombre (n) resp. (m) de processus de soudage, en une charge goujon, charge pièce à usiner et/ou N° de position sont exploitées respectivement en commun, ce à partir de quoi une valeur moyenne respective (Mwm, Kwm) et une dispersion (MwStr, KwStr) des grandeurs (Mw) resp. des valeurs caractéristiques (Kw) sont établies et les valeurs moyennes (Mwm, Kwm) sont utilisées dans les opérations suivantes en tant que valeurs réelles, et que de nouvelles valeurs limites (M'wgu, M'wgo; K'wgu, K'wgo) sont déterminées sur la base des valeurs moyennes (Kwm, Mwm) et des dispersions (MwStr, KwStr), l'intervalle entre les valeurs limites inférieures (M'wgu, K'wgu) et les valeurs limites supérieures (M'wgo, K'wgo) étant de préférence plus grand que les dispersions respectives (MwStr, KwStr).

3. Procédé selon spécification 1 ou 2, caractérisé par le fait que les grandeurs (Mw), les valeurs (Kw) et les valeurs réglantes (BP) sont comparées avec des valeurs limites allouées (Mwgu, Mwgo; Kwgu, Kwgo; Bpgu, Bpgo) et qu'en cas de dépassement des limites par la grandeur caractéristique respective en question (Mw) ou la valeur (Kw) ou l'une des valeurs réglantes (BP), un signal d'alarme y relatif (AS, AS1, AS2) est généré et affiché.

4. Procédé selon l'une des spécifications précédentes, caractérisé par le fait que les grandeurs caractéristiques (Mw), les valeurs caractéristiques (Kw) et les valeurs réglantes (BP) sont comparées avec des valeurs limites fixes ou de préférence variables (M'wgu, M'wgo; K'wgu, K'wgo; Bp'wgu, Bp'wgo) et que, lors du dépassement de l'une des valeurs limites, la valeur limite correspondante est, chaque fois, utilisée en tant que valeur réelle au lieu de la valeur vérifiée (Mw, Kw, BP) lors des travaux suivants, ou employée à la formation de valeurs moyennes (Mwm, Kwm) et de dispersions (Mwstr, Kwstr).

5. Procédé selon l'une des spécifications précédentes, caractérisé par le fait qu'avant l'opération de soudage au moins une des valeurs (C1, C2, C3; L, R, do) est mesurée et qu'une vitesse au choc (vt0-ist) est mesurée de préférence par, au moins, une opération de vérification de mouvement sans tension de soudure (Uo) ou déterminée sur la base de valeurs (ta, t0), et qu'une force initiale (Ko) est déterminée à partir de celle-ci.

6. Procédé selon l'une des spécifications précédentes, caractérisé par le fait que les grandeurs ($t_2$, $t_1$) du point d'explosion de la pointe ($t_1$) et du point de court-circuit goujon ($t_2$) sont déterminées sur la base du cours chronologique d'un signal de soudage (I(t)) et, à partir de ceci, la durée de brûlage de l'arc ($t_2$–$t_1$) est calculée, ce à partir de quoi la longueur de pointe (S1) est déterminée, laquelle sert de base à la détermination de la vitesse au choc (vt0-prescrite), dont est déterminée la force initiale (Ko).

7. Procédé selon l'une des spécifications précédentes, caractérisé par le fait que les grandeurs ($t_0$, $t_1$) du point d'explosion de pointe ($t_1$) sont déterminées sur la base des signaux de soudage (I(t)), ce à partir de quoi la durée de fusion de pointe ($t_1$–$t_0$) est calculée et qu'à partir de ceci un diamètre de pointe (Sd) est déterminé à partir duquel et de l'inductance (L) la grandeur minimale de la tension de charge (Uo) est déterminée.

8. Procédé selon spécification 7, caractérisé par le fait que la sélection de capacité (Cv) est déterminée à partir de l'inductance (L) de sorte que l'instant ($t_m$) du maximum de courant (Itm) est situé dans la durée de brûlage de l'arc ($t_2$–$t_1$), de préférence dans la première moitié de celle-ci.

9. Procédé selon précification 8, caractérisé par le fait qu'une grandeur minimale est déterminée pour la tension de charge (Uo), à partir de l'inductance (L) et de la résistance (R) dans le circuit du courant de soudage, de sorte qu'au point de court-circuit de goujon ($t_2$) un courant (It2) s'écoule, lequel est, de préférence, d'environ 20% du courant maximal (Itm).

10. Procédé selon spécification 9, caractérisé par le fait que la tension de charge (Uo) est recherchée, selon la présélection de capacité (Cv) en question, en tenant compte d'une tension de charge déterminée séparément (Uo(C1), d'une capacité partielle (C1) et d'une autre capacité partielle (C2, C3).

11. Procédé selon l'une des spécifications précédentes, caractérisé par le fait qu'indépendemment de la tension de brûlage de l'arc (Utm), du courant y relatif (Itm) et de l'intervalle correspondant (dtm), une valeur caractéristique relative à l'état de surface (Obz-réel) est déterminée ou qu'à partir du cours d'un signal de pression acoustique (Lp(t)), en ce qui concerne une fréquence limite d'environ 1kHz, une intégrale de pression acoustique (Lpn) est formée dans la gamme de basses fréquences et une autre intégrale de pression acoustique (Lph) dans la gamme de fréquences plus élevées et que, sur la base de la relation entre les intégrales de pression acoustique (Lpn, Lph) et ces intégrales elles-mêmes, une valeur caractéristique relative à l'état de surface (Obz-réel) est déterminée et une valeur caractéristique relative au matériel de surface (Obm-réel) est déterminé à partir de la profondeur de pénétration du goujon (d3) et de l'amplitude de rebondissement (d4), une énergie de l'arc électrique (Eb prescrite) étant déterminée sur la base de la valeur caractéristique de matériel de surface (Obm-réel) et des valeurs caractéristiques d'état de surface (Obz-réel), laquelle est prise en compte dans la détermination de la tension de charge (Uo, Uo (C2, C3)) et la présélection de capacité (Cv).

12. Procédé selon l'une des spécifications précédentes, caractérisé par le fait qu'au moins un signal de soudage (U(t), J(t)) est mesuré dans un système à tranches de temps, dont l'intervalle correspond à environ un pour cent de la durée de soudage, et est mémorisé et qu'après le soudage, un algorithme de filtrage est appliqué sur la séquence enregistrée pour filtrer les signaux de perturbations sporadiques de courte durée, ce après quoi un algorithme d'analyse est appliqué sur la séquence filtrée, lequel détermine inconstances et valeurs extrêmes et l'instant de leur manifestation dans la séquence en tant que grandeurs caractéristiques (t1, t2, tm) et délivre les valeurs de mesure en découlant (Jt1, Jt2, Jtm, Ut1, Ut2).

13. Procédé selon l'une des spécifications précédentes, caractérisé par le fait qu'à des moments prédéterminés alloués (t0, t1-prescrit, t2-prescrit, tm-pr.) ou à des moments caractéristiques (t1-réel, t2-réel, tm-réel), établis à partir d'au moins un signal de soudage (J(t)), la grandeur temporelle respective est mesurée et mémorisée par les signaux de soudage.

14. Procédé selon l'une des spécifications précédentes, caractérisé par le fait qu'au début de l'exécution d'une soudure, la résistance électrique des pieds d'appui (41, 42, 43) de la tête de soudage par rapport à la surface (53) de la pièce à usiner est mesurée et les valeurs mesurées comparées entre elles et avec des valeurs limites allouées, et que, lors du dépassement d'une valeur limite un signal d'alerte est lancé, lequel déclenche, de préférence, un nouveau positionnement.

15. Procédé selon l'une des spécifications précédentes, caractérisé par le fait qu'au début de l'exécution d'une soudure la position de la tête de soudage est mesurée ou prise en charge par un dispositif de positionnement et le signal de position est introduit dans la détermination de la force initiale (Ko).

16. Procédé selon spécification 1, caractérisé par le fait que les organes réglants (67, Tr, Mu1) sont commutables électriquement et que leurs entrées de commande sont reliées aux sorties correspondantes du dispositif de commande (MP) aux fins d'amenée des valeurs réglantes (Ko, Cv, Uo), et que le dispositif de commande (MP) est relié, côté entrée, à un dispositif d'introduction (Ta) aux fins d'amenée des valeurs caractéristiques (Ku; Obz1, Sa, Fk).

17. Procédé selon spécification 16, caractérisé par le fait que l'organe réglant (67) pour la force élastique initiale consiste en un moteur, qui tend un ressort (62), logé dans une douille (63), en tournant une douille filetée (64) ajustée avec un filetage sur la douille (63), et que, de préférence, la douille (63) est reliée au contact glissant (71) d'un potentiomètre (70), auquel un signal de position y relatif peut être reçu à un raccord (37a).

18. Procédé selon la spécification 16 ou 17, caractérisé par le fait que la tête de soudage est pourvue d'au moins un pied d'appui (42) à l'aide duquel elle établit, à proximité de l'endroit de la soudure (54) un contact électrique sur la surface (53), et que le pied d'appui (42) et le raccord (47) du câble de soudage (31) au goujon (5) sont raccordés à un câble de mesurage de tension blindé (32, 32a), à l'extrémité opposée duquel la tension de soudage est mesurable.

19. Procédé selon spécification 18, caractérisé par le fait que la tête de soudage est pourvue de trois pieds d'appui (41, 42, 43), sont les surfaces d'appui se terminent sur la surface (53) à l'intervalle (do) avant la pointe (54), et sont reliés, étant logés isolés par rapport à la tête de soudage, individuellement à des brins d'un câble de mesure (32a, 32b, 32c) pourvu de préférence d'un écran (32).

20. Procédé selon l'une des spécifications de 16 à 19, caractérisé par le fait que, d'une part, avec le goujon (5), de préférence par la tige (61), le mécanisme de pression et, d'autre part, avec le carter (1) de la tête de soudage, un indicateur de course, travaillant de préférence inductivement ou électrooptiquement, est disposé, lequel est relié à un raccord (40, 40a) auquel le signal de course du goujon (d(t)) peut être reçu statiquement ou dynamiquement.

21. Procédé selon spécification 16, caractérisé par le fait qu'un microphone (74) et/ou un capteur de lumière électronique sont disposés à la tête de soudage et reliés par des câbles (35, 35a, 35b), auxquels des signaux de soudage (Lp(t), Li(t)) peuvent être reçus.

22. Procédé selon spécification 16, caractérisé par le fait que le dispositif de commande (MP) consiste en un microprocesseur relié à un convertisseur analogue-numérique (ADU), dont l'entrée est raccordée aux organes de mesure (70, 74, 32/40) de façon manœuvrable, et que le dispositif de commande (MP) est relié à l'entrée d'amorçage de l'organe de commutation (TH1) qui consiste en un thyristor.

23. Procédé selon spécification 22, caractérisé par le fait que le convertisseur analogue-numérique (ADU) est relié, côté entrée, par l'intermédiaire d'un multiplexeur de mesure (Mu2), commandé par le microprocesseur (MP), aux câbles (32′, 32′a; 38, 38a; 39, 39a; 40, 40a; 37, 37a; 35, 35a, b) conduisant le signal de mesure, et que l'un des câbles (39, 39a) est relié au condensateur de soudage (C1, C2, C3) et l'un des câbles (38, 38a) aux extrémités d'une résistance de mesure (RM), intégrée dans le circuit du courant de soudage en amont du câble de soudage.

24. Procédé selon spécification 22 ou 23, caractérisé par le fait que le microprocesseur (MP) est relié, côté sortie, avec une commutation de charge (NT, Rv, Tr) et lui conduit un signal de commande (Ts), par la durée duquel la charge du condensateur (C1, 2, 3) est commandée à la tension de charge allouée (Uo) ou reglée par mesurage de la tension de charge (Uo′).

25. Procédé selon spécification 22 ou 23, caractérisé par le fait que le microprocesseur (MP) est relié, côté sortie, au moteur (67) et agit sur celui-ci en ce qui concerne direction et durée, de façon allouée, ceci de préférence de sorte que le signal au contact glissant (37a) du potentiomètre (70), alimenté à une tension (Up) entre ses extrémités (37, 37b), ait une valeur prédéterminée.

26. Procédé selon l'une des spécifications de 22 à 24, caractérisé par le fait que le condensateur de soudage (C1, 2, 3) est composé de plusieurs condensateurs partiels (C1, C2, C3), reliés entre eux à l'un de leurs raccords, et à leur second raccord, en continu, entre eux, avec des diodes (D2, D3), et avec leur second raccord, en continu à un commutateur, de préférence: un multiplexeur (Mu1), qui relie, indépendemment de la position ou de la présélection de capacité amenée (Cv), le raccordement pour la charge (NT, Rv, Ts) aux condensateurs (C1, C2, C3) respectivement amorcés, et que, de préférence, la présélection de capacité (Cv) est reliée à une sortie du microprocesseur (MP).

27. Procédé selon la spécification 22 ou 23, caractérisé par le fait qu'au moins un brin du câble de mesure (32a, b, c) est relié à un thyristor (TH2, 3, 4), raccordé à son électrode de commande au microprocesseur (MP) et pouvant être amorcé par celui-ci, à l'aide d'un signal d'allumage (Tz2, 3, 4), et relié, côté entrée, de préférence, au condensateur de soudage (C1, 2, 3), et que le câble de mesure (32a, b, c; 32) est conduit au câble de soudage (31) pour couplage inductif étroit, en proximité étroite.

28. Procédé selon spécification 22, caractérisé par le fait que le microprocesseur (MP) est relié, côté entrée, à un générateur de rythme (C1) et des appareils d'introductions (Ta, PoS) et, le cas échéant, à une conduite d'introduction de données (Dt), et, côté sortie, à des appareils de sortie (Dp, Pr, AM1, 2) et, le cas échéant, à une conduite de transmission des données (Dü).

29. Procédé selon spécification 22, caractérisé par le fait qu'au moins un des signaux de soudage (U(t), J(t), d(t), Lp(t), Li(t)) est conduit à un réseau de déclenchement trigger (TNW1, 2) lequel délivre chaque fois une impulsion de sortie (Tt0, Tt1...) lorsque le signal de soudage traverse une inconstance et/ou une valeur extrême, et que, le cas échéant, plusieurs de ces signaux trigger sont interconnectés par une grille OU (OG3), dont le signal de sortie (St) est conduit à une entrée interrupt du microprocesseur (MP).

30. Procédé selon spécification 29, caractérisé par le fait que le réseau de déclenchement trigger (TNW1) consiste en un comparateur (K1) avec une hystérésis petite par rapport au inconstances, à l'une des entrée duquel le signal de soudage (J(t)) est conduit par l'intermédiaire d'une résistance (RK1), parallèle à laquelle un élément limiteur (DK1, DK2) est connecté, et à la seconde entrée inversante duquel le signal de soudage (J(t)) est conduit par l'intermédiaire d'un élément limiteur (DK3, DK4), d'un élément de mémorisation et un condensateur (CK1), et dont la sortie de même sens et inversée est conduite respectivement sur un générateur d'impulsions (P1, P2) et dont, le cas échéant, les plusieurs sorties sont rassemblées par une grille OU (OG1).

31. Procédé selon spécification 22, caractérisé par le fait que le signal de pression acoustique (Lp(t)) est conduit parallèlement à un élément passe-bas (Tp) et à un élément passe-haut (Hp), avec integrateur respectif (JG1, JG2), connectè en aval, et que les intégrateurs sont déchargés resp. normés par des commutations de commande (Tr1, Tr2), avant un soudage, et libérés pendant le soudage, le signal de commande relatif étant conduit du Microprocesseur (MP) ou d'un Flipflop (FF), connecté en aval du réseau de déclenchement trigger (TNW1) aux commutations de commande (Tr1, Tr2), et que les sorties des intégrateurs sont reliées aux entrées du multiplexeur des mesure (Mu2).

Fig.2

Fig.1

Fig. 3

Fig. 4

Fig.5

Fig.6

Fig. 7

Ta PoS Dt (Ba.Obm.Obz,Sa,Fk)

St

Md

MP

CL

ADU

Ts Tz1÷4 Cv Mo Ma Uo,Ko.. Mt

Dp Pr

Mp2

37a

37

70

37b

67 34 7 36

Mu2

Dü

AS1,2.....

AM1

AM2

U(t) 32'/32'a  I(t) 38/38a  Uo' 39/39a  LP(t) 35/35a  Li(t) 35b  d(t) 40/40a  Ko' 37/37a

Up +

NT

UL −

+

Rv

Ts

Tr

Mu1

Cv

D3 D2

C3 C2 C1

Re

Tz4

TH4

Tz3

TH3

Tz2

TH2

Tz1

TH1

D

RM

LL32c  Lm2  32c  43

LL32b  32b  41

LL32a  32a  46a

LL32  32  B

32' 32'a  LL2  RL2  31  47

LL1  Lm1  RL1

39  39a  38  38a

53b

53a

53

42

54  G

0 100 787

Fig. 8

0 100 787

31